# EUROPEAN PATENT APPLICATION

(11) **EP 4 339 225 A1**
(43) Date of publication of application: **20.03.2024**
(21) Application number: 22807407.6
(22) Date of filing: 06.05.2022
(51) Int. Cl.: C08G 65/336, C07F 7/12, C08G 65/333

(54) **FLUORINE-INCLUDING ORGANOHYDROSILANE COMPOUND**

(30) Priority: 14.05.2021 JP 2021082145; 02.07.2021 JP 2021110853
(71) Applicant: SHIN-ETSU CHEMICAL CO., LTD., Tokyo 1000005 (JP)
(72) Inventor: HAYASHI Ryuto, Annaka-shi, Gunma 379-0224 (JP); FUKUDA Kenichi, Annaka-shi, Gunma 379-0224 (JP)
(74) Representative: Ter Meer Steinmeister & Partner
(86) International application number: PCT/JP2022/019558
(87) International publication number: WO 2022/239705

(57) **Abstract**

This novel fluorine-including organohydrosilane compound is represented by formula (1), has two or more hydrosilyl groups, has a feature wherein the inter-Si links all comprise silalkylene structures, has good compatibility with base oils, and provides a fluoropolyether-based cured product having good characteristics. 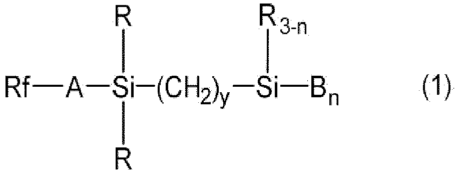 (Rf is a monovalent perfluoropolyether group; A is a divalent organic group that may include at least one element selected from O, N, and Si; R is a C1-6 monovalent hydrocarbon group; n is an integer from 1 to 3; each B is a monovalent silicon-including organic group that has two or more diorganohydrosilyl groups when n is 1, independently has one or more diorganohydrosilyl groups when n is 2 or 3, and forms a silalkylene structure with the silicon atom linked thereto; and y is 1 or 2.)

## Description

### TECHNICAL FIELD

The present invention relates to a fluorine-containing organohydrogensilane compound containing no siloxane bond and having two or more hydrosilyl groups (SiH groups) in one molecule. This compound is excellent in compatibility with a linear fluoropolyether compound and thus is suitably used as an additive, such as a crosslinking agent for a fluoropolyether-based curable composition.

### BACKGROUND ART

Fluoropolyether-based curable compositions utilizing the addition reaction between alkenyl groups and hydrosilyl groups are known. For example, as curable compositions, compositions each containing a linear fluoropolyether compound that has two or more alkenyl groups in one molecule and that has a perfluoropolyether structure in the main chain (hereinafter, referred to as a "base oil"), a fluorine-containing organohydrogensiloxane having two or more hydrogen atoms directly bonded to silicon atoms in one molecule, and a platinum group metal compound have been proposed (Patent Document 1 and Patent Document 2 (JP-A H08-199070 and JP-A 2011-201940)). In addition, compositions each rendered self-adhesive by the addition of an organopolysiloxane having a hydrosilyl group, an epoxy group, and/or a trialkoxysilyl group as a third component (adhesion improver) have been proposed (Patent Document 3 and Patent Document 4 (JP-A H09-95615 and JP-A 2011-219692)). These compositions can be cured by heating for a short time. The resulting cured products (fluoropolyether-based cured products) are excellent in solvent resistance, chemical resistance, heat resistance, low-temperature properties, low moisture permeability, electrical properties, and so forth, and thus are used in various industrial fields where these properties are required.

Fluoropolyether-based curable compositions containing fluorine-containing organohydrogensiloxanes contain siloxane bonds that are unstable to acids, and cannot exhibit sufficient performance in applications where high levels of acid resistance are required. It has been proposed that the acid resistance of a fluoropolyether-based cured product is improved by the use of, instead of a fluorine-containing organohydrogensiloxane, a fluorine-containing organohydrogensilane compound containing no siloxane bond and having a short-chain perfluoroalkyl group (Patent Document 5 (JP-A 2002-012769)).

In the fluorine-containing organohydrogensilane compound having a perfluoroalkyl group, the proportion of the non-fluorinated organic structure in the entire molecule tends to be large. This is largely due to the convenience of the synthesis of the fluorine-containing organohydrogensilane compound and the restriction of the structure of a perfluoroalkyl group-containing compound that can be purchased as a raw material. The introduction of the short-chain perfluoroalkyl group tends to be less effective in imparting compatibility with the base oil to the organohydrogensilane compound. From the above, a fluorine-containing organohydrogensilane compound having a short-chain perfluoroalkyl group is often poor in compatibility with a base oil.

For this reason, when the above-described fluorine-containing organohydrogensilane compound is added to a fluoropolyether-based curable composition, the resulting fluoropolyether-based curable composition may become cloudy and have high viscosity. In addition, a fluoropolyether-based cured product obtained from the fluoropolyether-based curable composition may be dotted with uncured portions.

### PRIOR ART DOCUMENTS

### PATENT DOCUMENTS

Patent Document 1: JP-A H08-199070
Patent Document 2: JP-A 2011-201940
Patent Document 3: JP-A H09-95615
Patent Document 4: JP-A 2011-219692
Patent Document 5: JP-A 2002-012769

### SUMMARY OF INVENTION

### TECHNICAL PROBLEM

The present invention has been accomplished in light of the foregoing circumstances. It is an object of the present invention to provide a novel fluorine-containing organohydrogensilane compound that has two or more hydrosilyl groups in one molecule, that has good compatibility with a base oil, and that is suitably used as a crosslinking agent for a fluoropolyether-based curable composition that gives a fluoropolyether-based cured product having good properties.

### SOLUTION TO PROBLEM

The inventors have conducted intensive studies to solve the foregoing problems and have found that when a fluorine-containing group is introduced into an organohydrogensilane compound as a crosslinking agent for a fluoropolyether-based curable composition, the compatibility of the corresponding fluorine-containing organohydrogensilane compound with a base oil tends to be higher in a perfluoropolyether group than in a perfluoroalkyl group. That is, the inventors have found that when a fluorine-containing organohydrogensilane compound formed by introducing a compound having a monovalent perfluoropolyether group and an alkenyl group into a (fluorine-containing) organohydrogensilane compound having three or more hydrosilyl groups each having a predetermined structure is used as a crosslinking agent for a fluoropolyether-based curable composition, the compound has high compatibility with a base oil and can provide a fluoropolyether-based cured product having good properties. This finding has led to the completion of the present invention.

Accordingly, the present invention provides a fluorine-containing organohydrogensilane compound that has good compatibility with a base oil and is suitably used as a crosslinking agent for a fluoropolyether-based curable composition.
[1] A fluorine-containing organohydrogensilane compound is represented by the following general formula (1), has two or more hydrosilyl groups, and is a compound in which linkages of silicon atoms coupled to each other are each composed of a silalkylene structure, 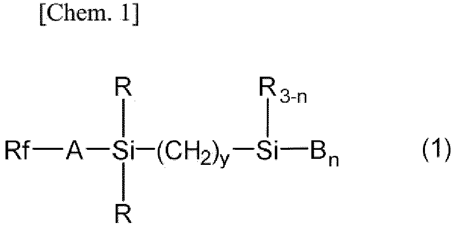 (where in the formula, Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, n is an integer of 1 to 3, when n is 1, B is a monovalent silicon-containing organic group that has two or more diorganohydrosilyl groups and that forms a silalkylene structure with a silicon atom coupled thereto, or when n is 2 or 3, each B is independently a monovalent silicon-containing organic group that has one or more diorganohydrosilyl groups and that forms a silalkylene structure with the silicon atom coupled thereto, and y is 1 or 2).
[2] In the fluorine-containing organohydrogensilane compound described in [1], Rf in general formula (1) is a group represented by the following general formula (2): 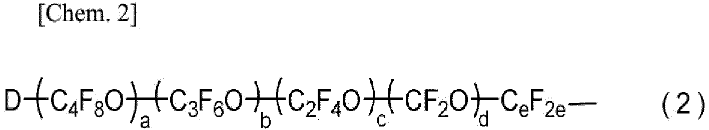 (where in the formula, D is a fluorine atom or a perfluorooxyalkyl group having 1 to 6 carbon atoms, a, b, c, and d are each independently an integer of 0 to 100, 2 ≤ a + b + c + d ≤ 100, e is an integer of 1 to 3, repeating units indicated in parentheses may be randomly bonded, and each of these units may be linear or branched).
[3] In the fluorine-containing organohydrogensilane compound described in [1] or [2], A in general formula (1) is selected from an alkylene group having 1 to 12 carbon atoms, an alkylene group containing an arylene group having 6 to 8 carbon atoms, a divalent group in which alkylene groups are bonded to each other with a diorganosilylene group provided therebetween, a divalent group in which an alkylene group is bonded to an arylene group with a diorganosilylene group provided therebetween, and a divalent group in which any of these groups further has at least one selected from an oxygen atom of an ether bond, a secondary amino group, a tertiary amino group, and an amide bond.
[4] In the fluorine-containing organohydrogensilane compound described in any one of [1] to [3], A in general formula (1) is any of groups represented by the following general formulae (3) to (6): 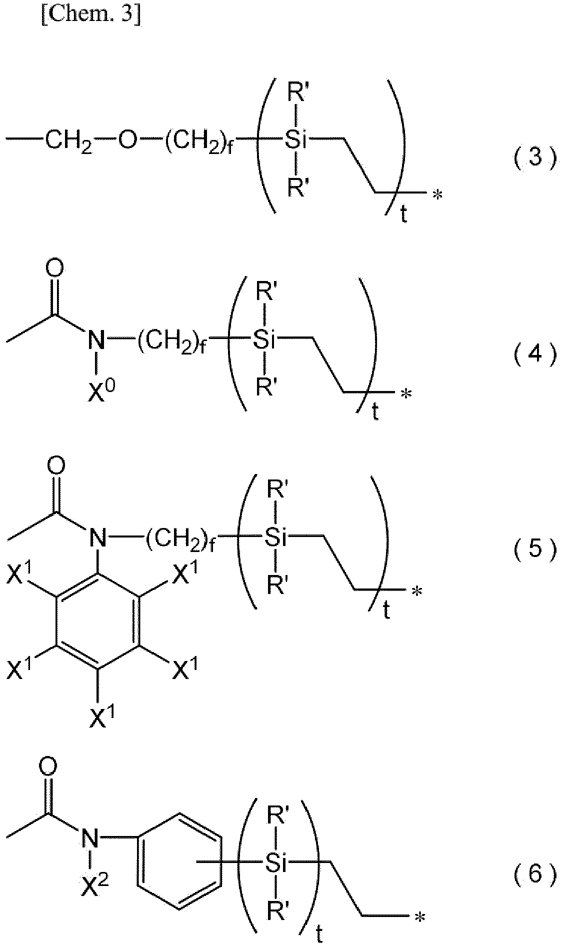 (where in the formulae, X⁰ is a hydrogen atom, a methyl group, or an ethyl group, each X¹ is independently a hydrogen atom, a fluorine atom, a methyl group, an ethyl group, or a trifluoromethyl group, X² is a hydrogen atom, a methyl group, an ethyl group, or a phenyl group, each R' is independently a methyl group or an ethyl group, f is an integer of 1 to 6, t is 0 or 1, bonds marked with * are each attached to a Si atom in general formula (1), and unmarked bonds are each attached to Rf).
[5] In the fluorine-containing organohydrogensilane compound described in any one of [1] to [4], each R in general formula (1) is any of a methyl group, an ethyl group, an isopropyl group, a tert-butyl group, and a phenyl group.
[6] In the fluorine-containing organohydrogensilane compound described in any one of [1] to [5], the number of consecutive silalkylene structures in a molecular chain between Rf and the diorganohydrosilyl group in B in general formula (1) is two or more.
[7] In the fluorine-containing organohydrogensilane compound described in any one of [1] to [6], B in general formula (1) is a group represented by the following general formula (7): 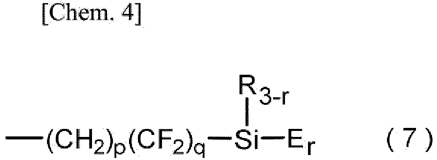 [where in the formula, p is an integer of 1 to 6, q is an integer of 0 to 6, r is an integer of 1 to 3, R is as defined above, E is a hydrogen atom or a group represented by the following formula: 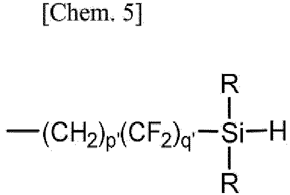 (where in the formula, R is as defined above, p' is an integer of 1 to 6, and q' is an integer of 0 to 6) (provided that when E is a hydrogen atom, r is 1), and repeating units indicated in parentheses with p and q or with p' and q' may be randomly bonded].
[8] In the fluorine-containing organohydrogensilane compound described in any one of [1] to [7], the fluorine-containing organohydrogensilane compound represented by formula (1) is a compound represented by any of the following formulae: 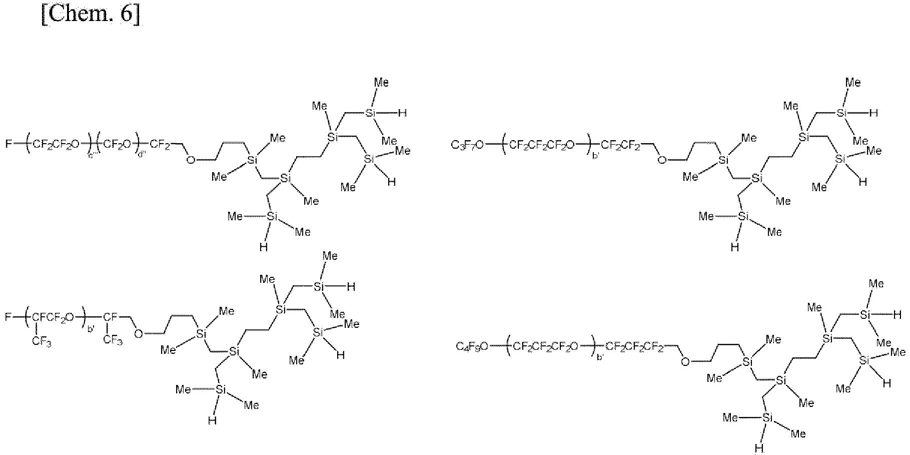 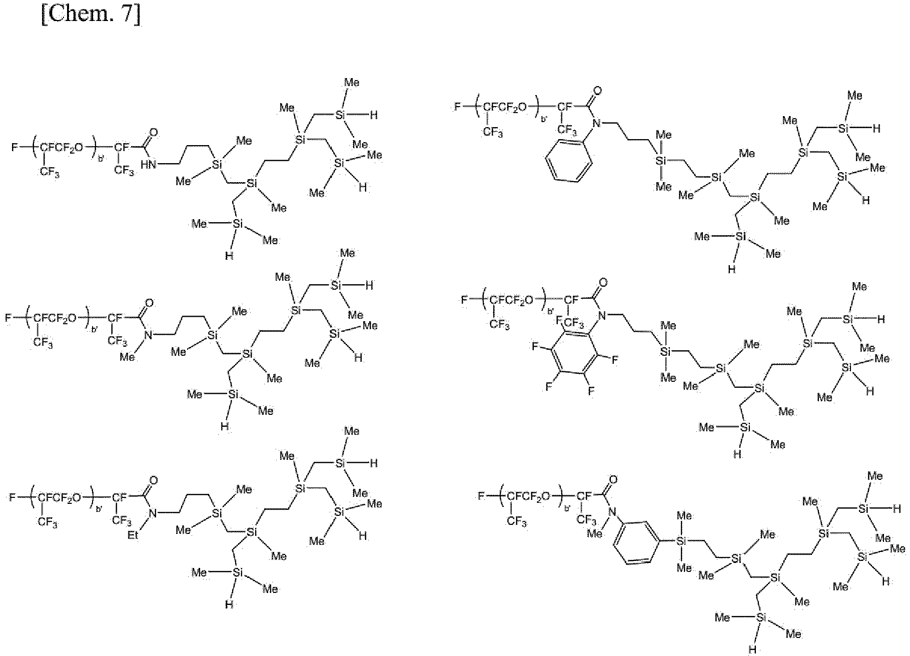 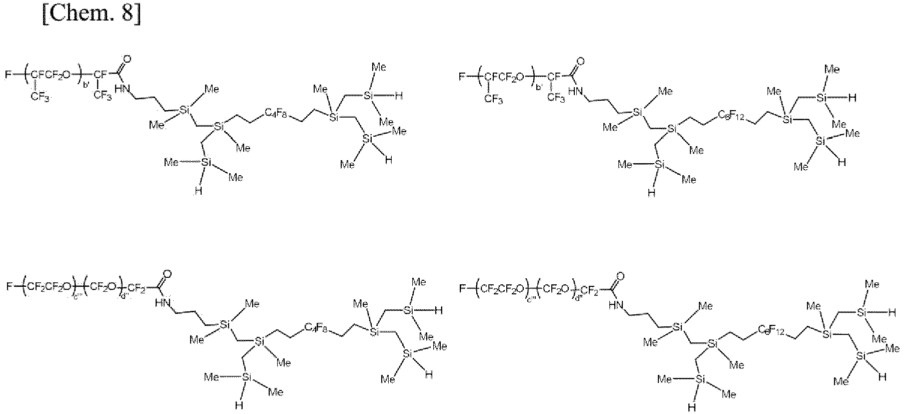 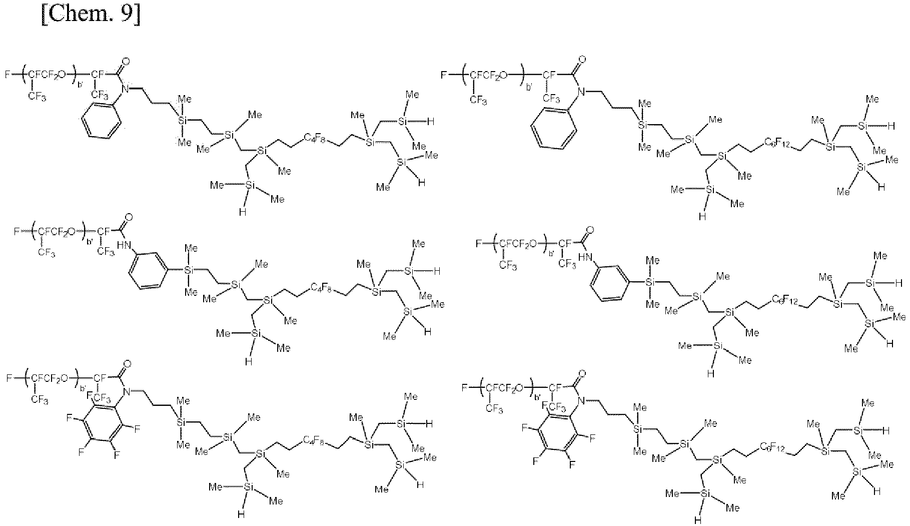 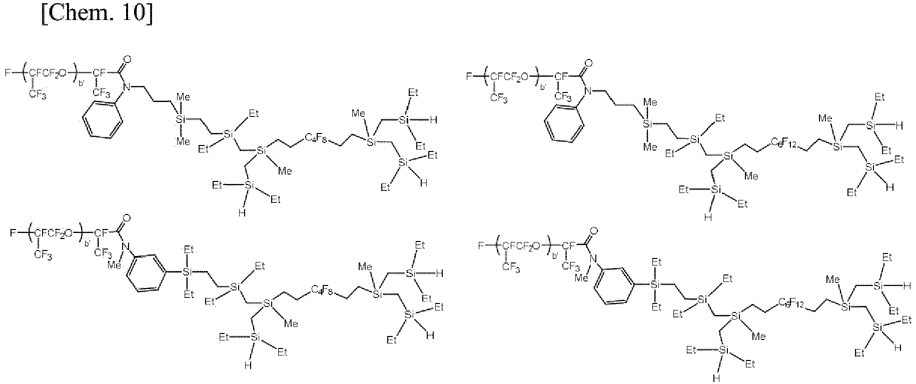 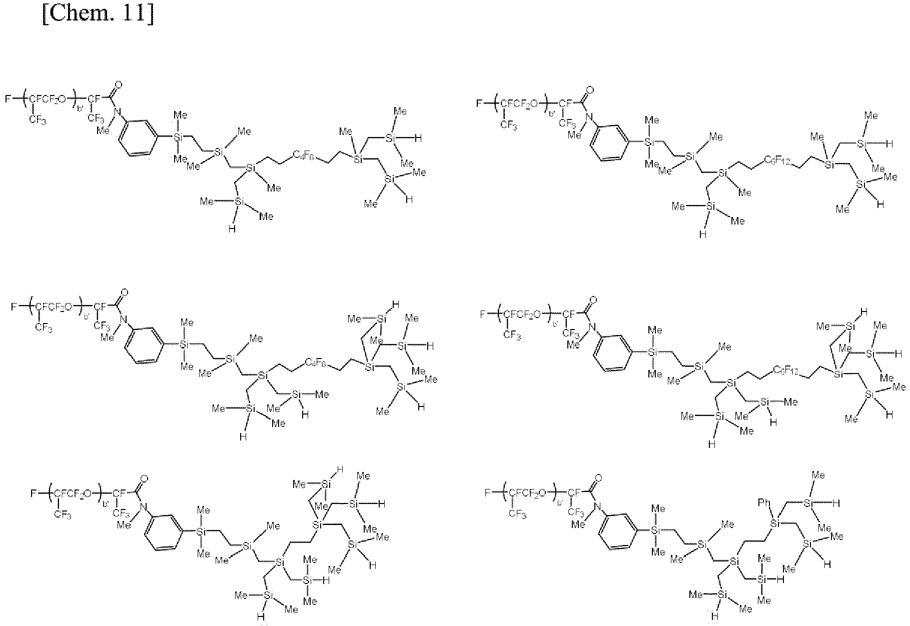 (where in each of the formulae, b' is an integer of 2 to 100, c'" and d" are each an integer of 1 to 99, c'" + d" = an integer of 2 to 100, Me is a methyl group, Et is an ethyl group, Ph is a phenyl group, and repeating units indicated in parentheses with c‴ and d" may be randomly bonded).

### ADVANTAGEOUS EFFECTS OF INVENTION

The fluorine-containing organohydrogensilane compound of the present invention contains no siloxane bond, exhibits high compatibility with a base oil in a fluoropolyether-based curable composition, and can inhibit clouding and an increase in the viscosity of the fluoropolyether-based curable composition. By curing the fluoropolyether-based curable composition using the fluorine-containing organohydrogensilane compound of the present invention, a fluoropolyether-based cured product that has been uniformly cured without being dotted with uncured portions can be obtained.

### BRIEF DESCRIPTION OF DRAWINGS

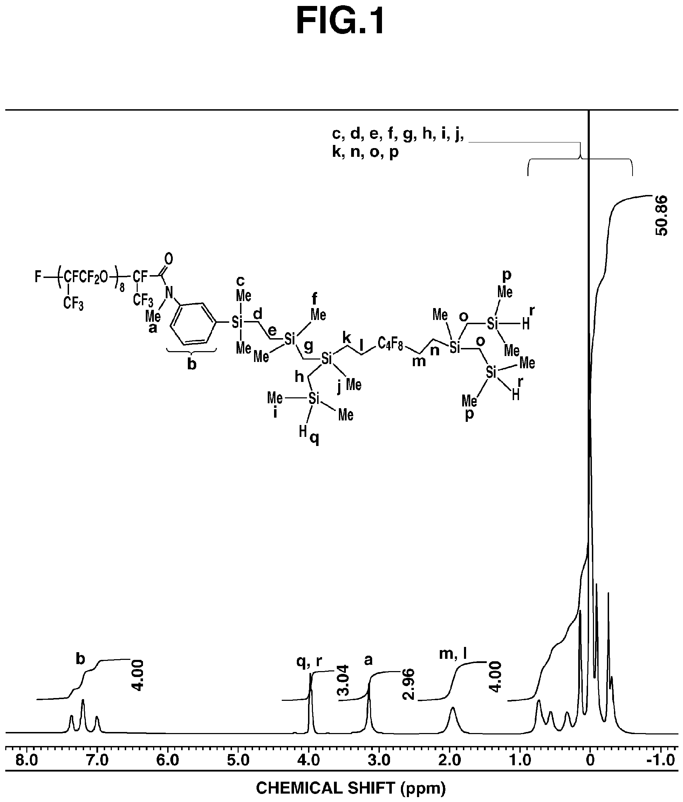

[FIG. 1] FIG. 1 is a ¹H-NMR spectrum of a compound represented by formula (18) prepared in Example 1.

### DESCRIPTION OF EMBODIMENTS

The present invention will be described in more detail below.

### [Fluorine-Containing Organohydrogensilane Compound]

The fluorine-containing organohydrogensilane compound according to the present invention is characterized by being represented by the following general formula (1), having two or more hydrosilyl groups, and being a compound in which linkages of silicon atoms coupled to each other are each composed of a silalkylene structure (alkylene groups in the silalkylene structures may be fluorine-substituted alkylene groups that have been partially substituted with fluorine), and contains no siloxane bond, 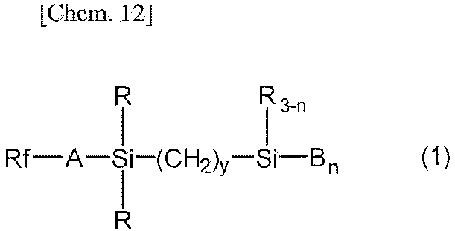 (where in the formula, Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, n is an integer of 1 to 3, when n is 1, B is a monovalent silicon-containing organic group that has two or more diorganohydrosilyl groups and that forms a silalkylene structure with a silicon atom coupled thereto, or when n is 2 or 3, each B is independently a monovalent silicon-containing organic group that has one or more diorganohydrosilyl groups and that forms a silalkylene structure with the silicon atom coupled thereto, and y is 1 or 2).

Rf in general formula (1) described above is a monovalent perfluoropolyether group. Rf is introduced to provide compatibility with a base oil in a fluoropolyether-based curable composition (particularly, a thermosetting fluoropolyether-based composition). The perfluoropolyether group is more effective than a perfluoroalkyl group in providing compatibility with a base oil when introduced into an organohydrogensilane compound. Thus, a fluorine-containing organohydrogensilane compound that gives a fluoropolyether-based cured product having good properties can be obtained.

In particular, Rf in general formula (1) described above is preferably a monovalent perfluoropolyether group represented by the following general formula (2): 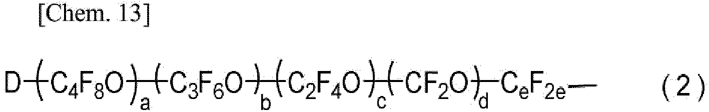 (where in the formula, D is a fluorine atom or a perfluorooxyalkyl group having 1 to 6 carbon atoms, a, b, c, and d are each independently an integer of 0 to 100, 2 ≤ a + b + c + d ≤ 100, preferably a is an integer of 0 to 50, b is an integer of 0 to 50, c is an integer of 0 to 50, d is an integer of a to 50, and 5 ≤ a + b + c + d ≤ 50, more preferably a is an integer of 0 to 10, b is an integer of 0 to 40, c is an integer of 0 to 30, d is an integer of 0 to 30, and 6 ≤ a + b + c + d ≤ 40, still more preferably 7 ≤ a + b + c + d ≤ 30, e is an integer of 1 to 3, repeating units indicated in parentheses may be randomly bonded, and each of these units may be linear or branched).

In general formula (2) described above, D is a fluorine atom or a perfluorooxyalkyl group having 1 to 6 carbon atoms. The perfluorooxyalkyl group having 1 to 6 carbon atoms is represented by C_{g}F_{2g+1}O- (where g is an integer of 1 to 6). Specific examples thereof include groups represented by the following formulae:

CF₃O-

CF₃CF₂O-

CF₃CF₂CF₂O-

CF₃CF(CF₃)O-

CF₃CF₂CF₂CF₂O-

CF₃CF₂CF₂CF₂CF₂CF₂O-

D is preferably a fluorine atom.

In general formula (2) described above, when a + b + c + d is less than 2, the compatibility between the fluorine-containing organohydrogensilane compound and a base oil may be lowered, which is not preferred. When a + b + c + d is more than 100, the fluorine-containing organohydrogensilane compound has high viscosity, and the thermosetting fluoropolyether-based composition to which the fluorine-containing organohydrogensilane compound is added also has excessively high viscosity, which is not preferred.

Examples of the monovalent perfluoropolyether group represented by general formula (2) described above include the following: 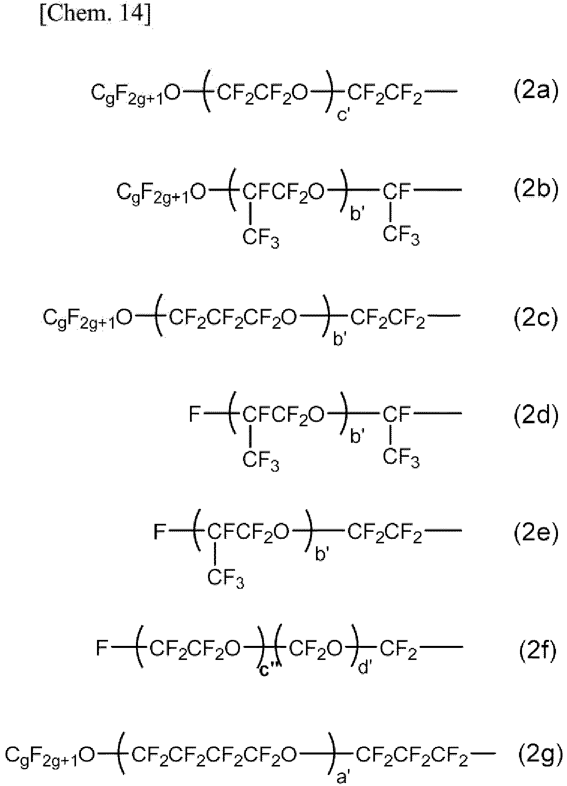 (where in the formulae, each g is an integer of 1 to 6; in formula (2a), c' is an integer of 2 to 100; in formulae (2b) to (2e), each b' is an integer of 2 to 100; in formula (2f), c" and d' are each an integer of 0 to 100, and c" + d' is an integer of 2 to 100; in formula (2g), a' is an integer of 2 to 100; and in formula (2f), repeating units indicated in parentheses may be randomly bonded).

In general formula (1) described above, A is a divalent organic group that has 1 to 20 carbon atoms and that may contain at least one selected from an oxygen atom, a nitrogen atom, and a silicon atom, preferably a divalent hydrocarbon group that has 1 to 20 carbon atoms and that may contain at least one selected from an oxygen atom, a nitrogen atom, and a silicon atom. Examples of A include an alkylene group having 1 to 12 carbon atoms, an alkylene group having 1 to 12 carbon atoms and containing an arylene group having 6 to 8 carbon atoms (for example, an alkylene-arylene group having 7 to 18 carbon atoms), a divalent group in which alkylene groups having 1 to 10 carbon atoms are coupled to each other with a diorganosilylene group provided therebetween, a divalent group in which an alkylene group having 1 to 10 carbon atoms and an arylene group having 6 to 8 carbon atoms are coupled to each other with a diorganosilylene group provided therebetween, and a divalent group in which any of these groups further has at least one selected from an oxygen atom of an ether bond, a secondary amino group (imino group), a tertiary amino group (substituted imino group), and an amide bond. Among these, A is preferably a divalent group containing, in its molecular chain, at least one selected from an oxygen atom of an ether bond, a secondary amino group (imino group), a tertiary amino group (substituted imino group), and an amide bond. When A contains a silicon atom (diorganosilylene group), the silicon atom (diorganosilylene group) and the silicon atom to which A is coupled preferably form a silalkylene structure in which the silicon atoms are coupled to each other with an alkylene group (preferably an unsubstituted or fluorine-substituted alkylene group having 1 to 12 carbon atoms, more preferably an ethylene group) provided therebetween.

Specifically, A is preferably represented by any of the following general formulae (3) to (6): 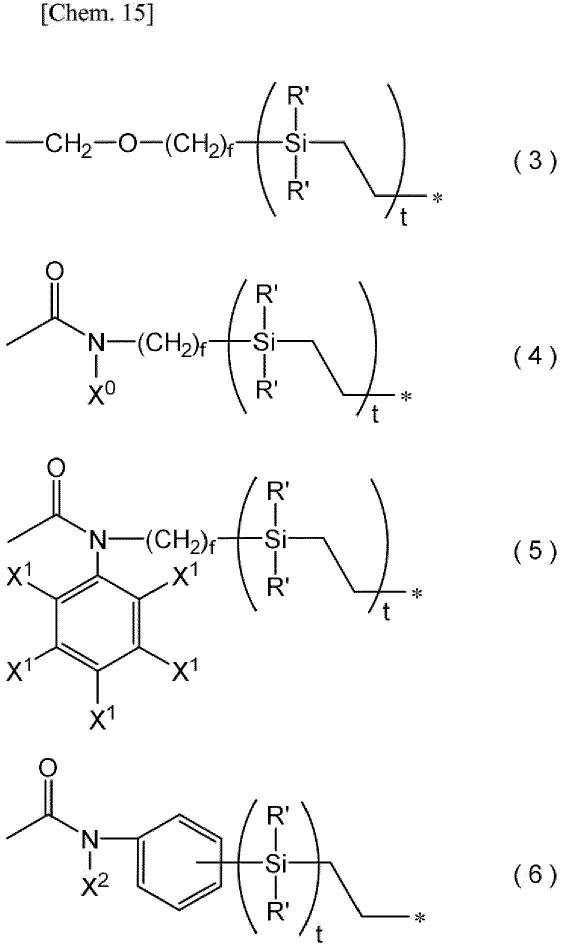 (where in the formulae, X⁰ is a hydrogen atom, a methyl group, or an ethyl group, each X¹ is independently a hydrogen atom, a fluorine atom, a methyl group, an ethyl group, or a trifluoromethyl group, X² is a hydrogen atom, a methyl group, an ethyl group, or a phenyl group, each R' is independently a methyl group or an ethyl group, f is an integer of 1 to 6, t is 0 or 1, bonds marked with * are each attached to a Si atom in general formula (1) described above, and unmarked bonds are each attached to Rf).

Examples of the structures of A represented by general formulae (3) to (6) described above include the following: 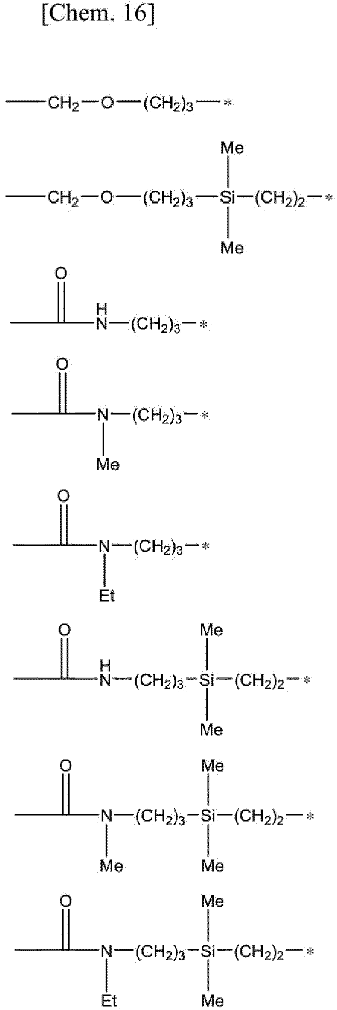 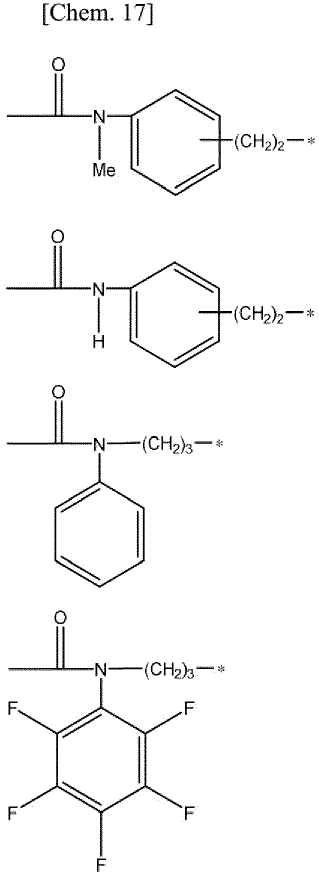 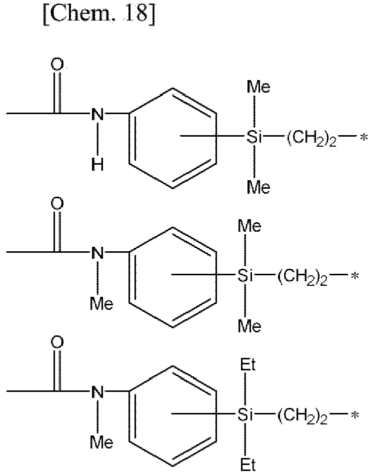 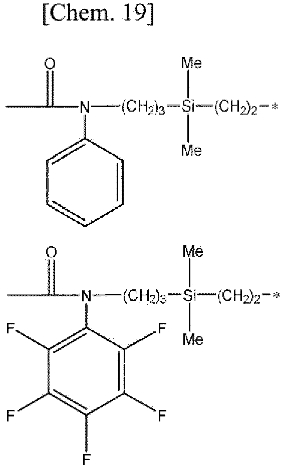 (where in the formulae, Me is a methyl group, Et is an ethyl group, bonds marked with * are each attached to the Si atom in general formula (1) described above, and unmarked bonds are each attached to Rf).

Each R in general formula (1) described above is independently a monovalent hydrocarbon group having 1 to 6 carbon atoms. Specifically, each R is preferably a methyl group, an ethyl group, an isopropyl group, a tert-butyl group, or a phenyl group, more preferably a methyl group or an ethyl group.

In general formula (1) described above, when n is 1, B is a monovalent silicon-containing organic group that has two or more, preferably two to five, diorganohydrosilyl groups and that forms a silalkylene structure with a silicon atom coupled thereto, or when n is 2 or 3, each B is independently a monovalent silicon-containing organic group that has one or more, preferably one to three, diorganohydrosilyl groups and that forms a silalkylene structure with the silicon atom coupled thereto. B does not contain a siloxane bond. The silalkylene structure is preferably a structure in which silicon atoms are coupled to each other with an unsubstituted and/or fluorine-substituted alkylene group R^{A} having 1 to 12 carbon atoms provided therebetween. B preferably has one or more silicon atoms, more preferably 1 to 6 silicon atoms, still more preferably 1 to 4 silicon atoms. In formula (1), one to three B groups are bonded to the silicon atom (n = an integer of 1 to 3). Preferably, two or three B groups are bonded to the silicon atom (preferably, n is 2 or 3).

The number of consecutive silalkylene structures in the molecular chain between Rf and the diorganohydrosilyl group in B in general formula (1) described above (i.e., consecutive silalkylene bonds (-Si-R^{A}-Si-) including -A-Si-, -Si-(CH₂)_{y}-Si-, and -Si-B in the formula) is preferably two or more, more preferably two, three, or four.

B is preferably represented by the following general formula (7): 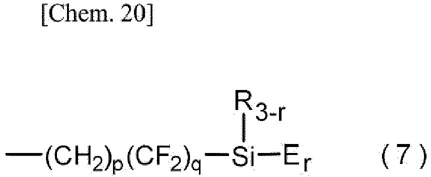 [where in the formula, p is an integer of 1 to 6, preferably an integer of 1 to 4, q is an integer of 0 to 6, preferably 0 or an integer of 4 to 6, r is an integer of 1 to 3, R is as defined above, E is a hydrogen atom or a group represented by the following formula: 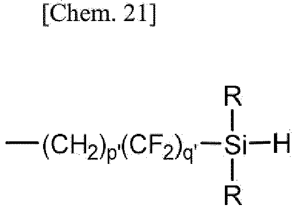 (where in the formula, each R is as defined above, p' is an integer of 1 to 6, preferably an integer of 1 to 4, and q' is an integer of 0 to 6, preferably 0 or an integer of 4 to 6 (provided that when E is a hydrogen atom, r is 1), and repeating units indicated in parentheses with p and q or with p' and q' may be randomly bonded].

R in general formula (7) described above is a monovalent hydrocarbon group having 1 to 6 carbon atoms, similarly to R in general formula (1) described above. Particularly preferably, R is a methyl group, an ethyl group, a propyl group, an isopropyl group, a tert-butyl group, or a phenyl group.

Examples of B in general formula (1) described above include the following: 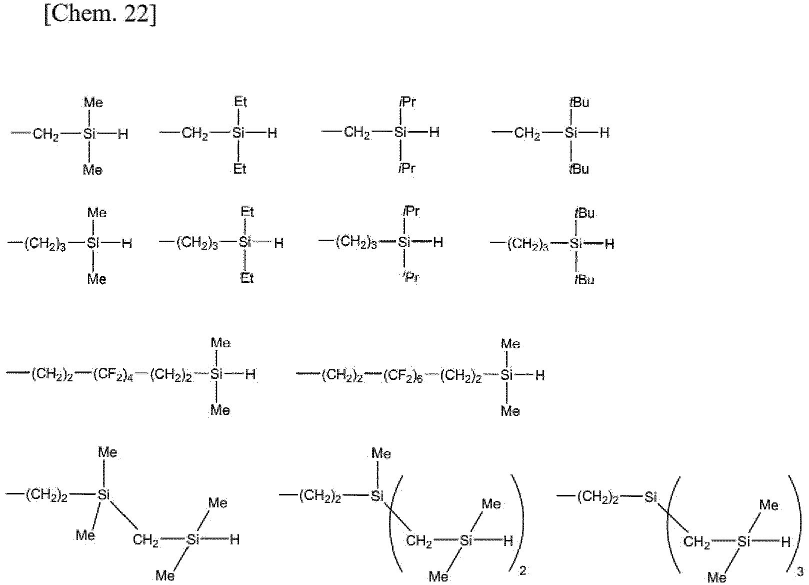 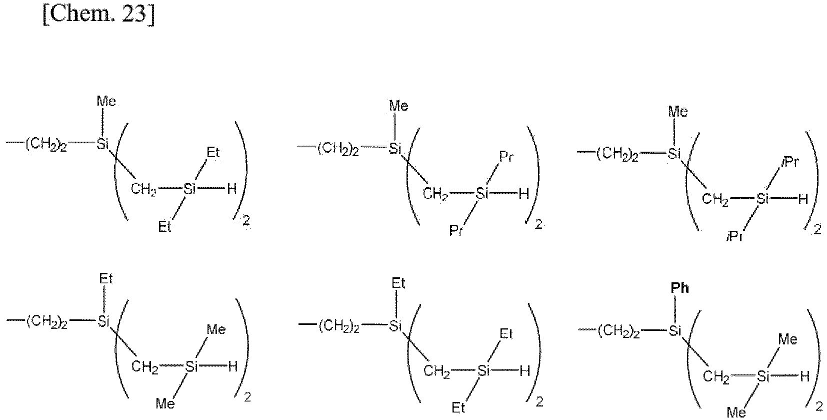 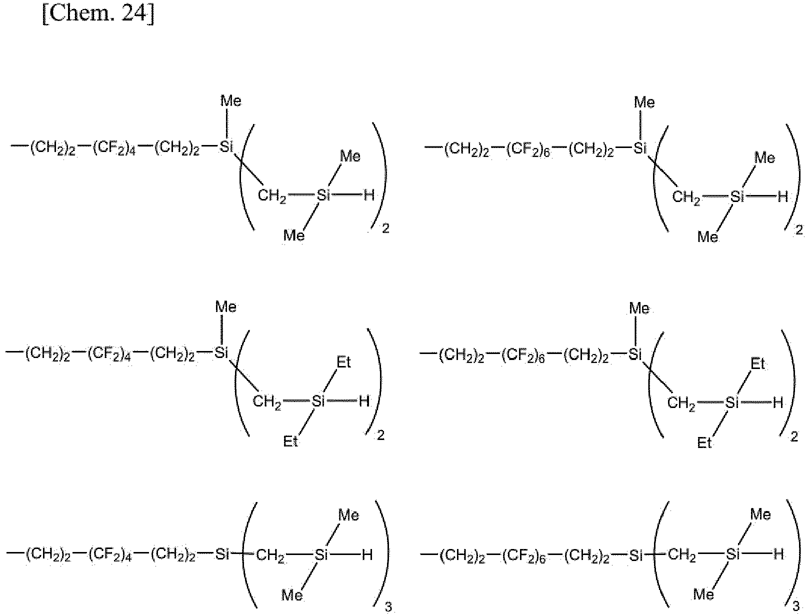 (where in the formulae, Me is a methyl group, Et is an ethyl group, iPr is an isopropyl group, tBu is a tert-butyl group, and Ph is a phenyl group).

The amount of hydrosilyl groups in the fluorine-containing organohydrogensilane compound of the present invention is preferably 0.05 to 0.35 mol/100 g, more preferably 0.06 to 0.30 mol/100 g.

Examples of the fluorine-containing organohydrogensilane compound represented by general formula (1) described above include the following: 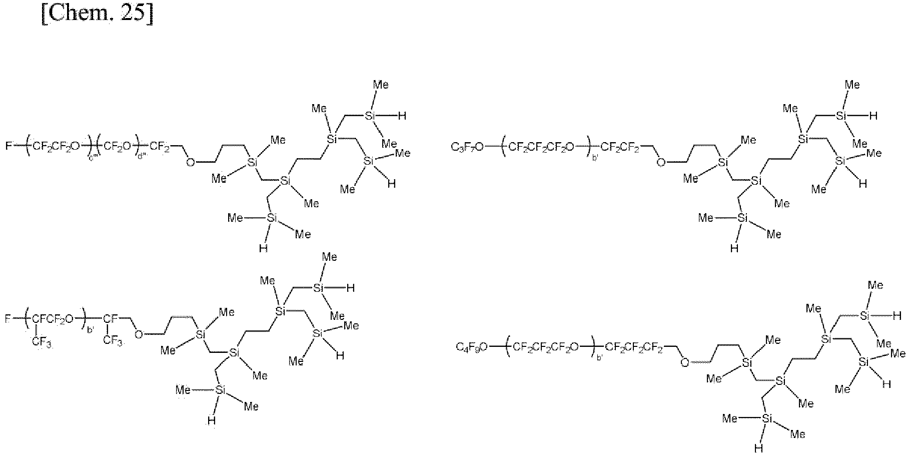 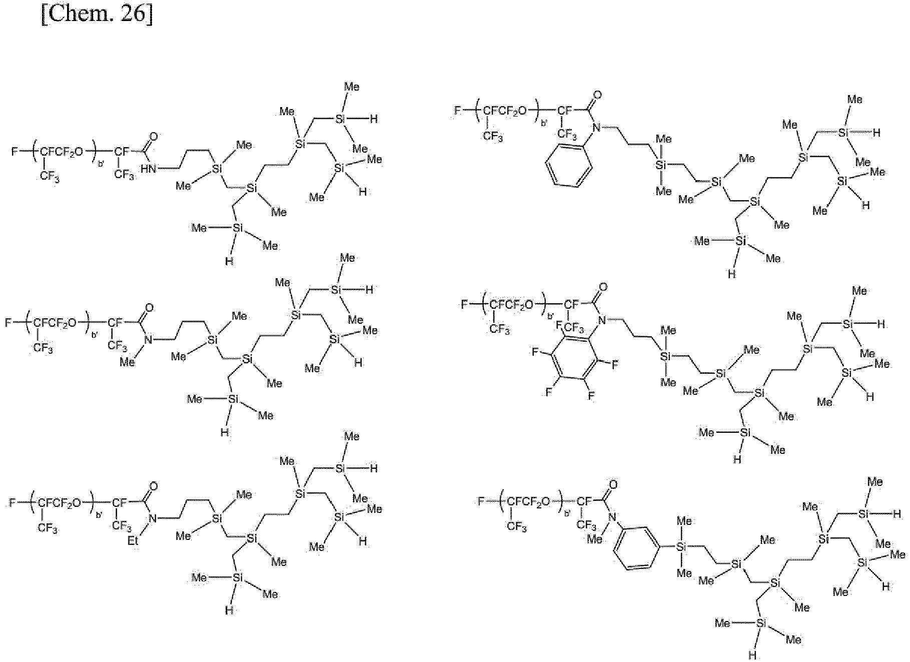 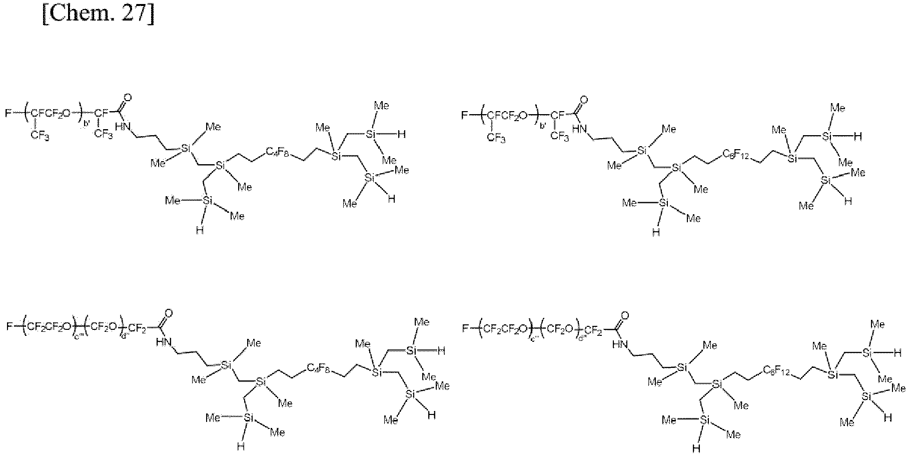 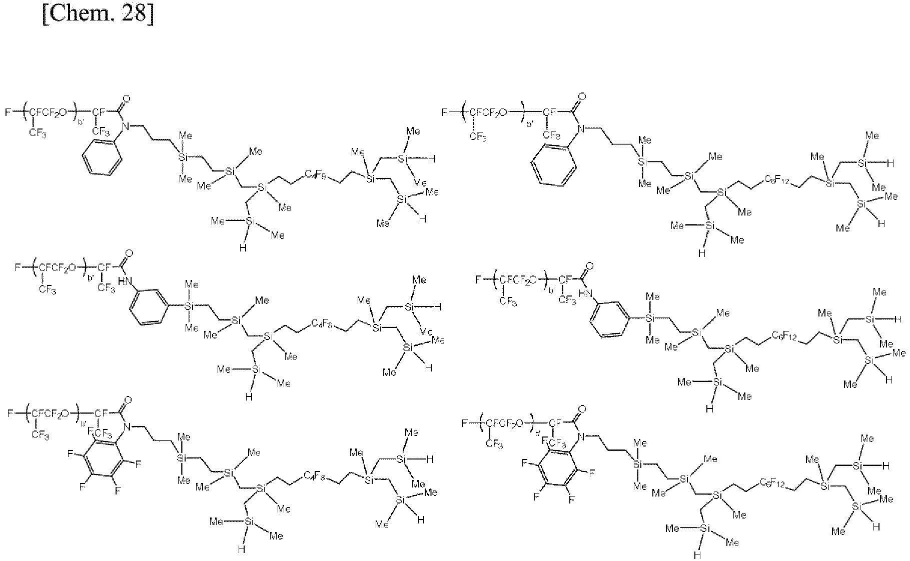 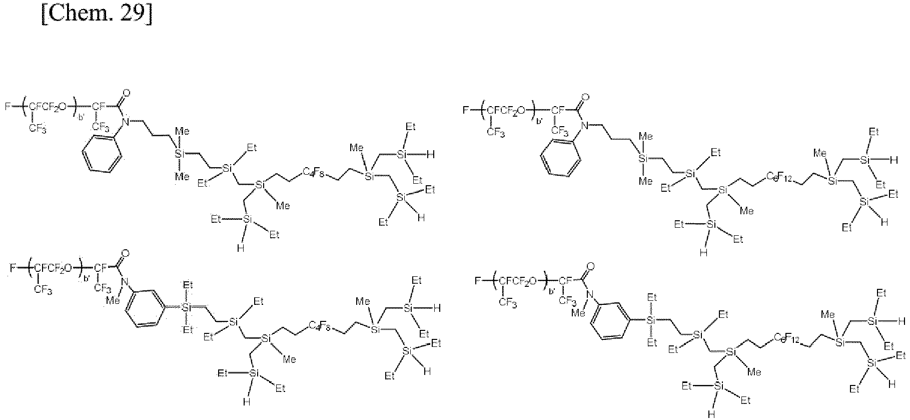 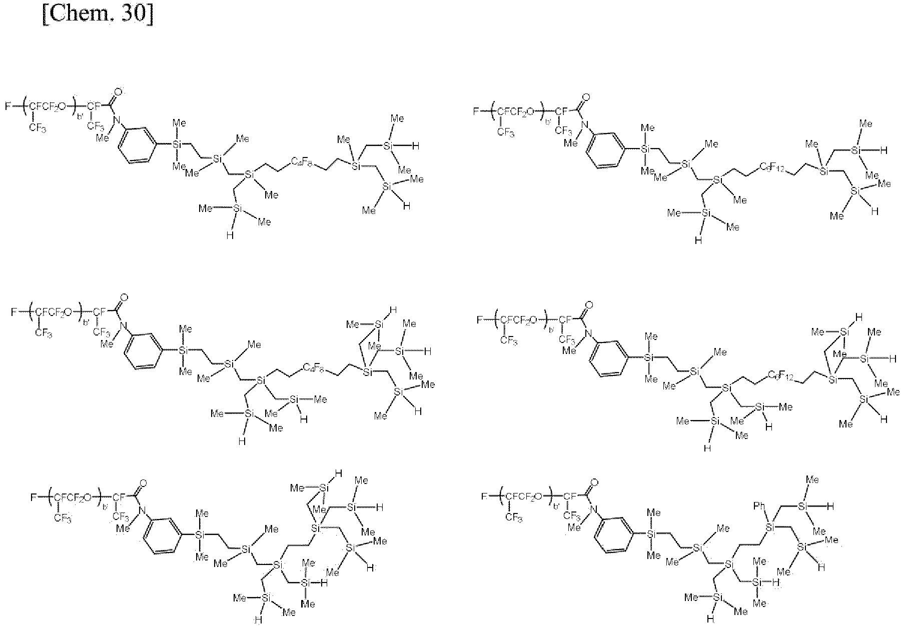 (where in each of the formulae, b' is an integer of 2 to 100, c‴ and d" are each an integer of 1 to 99, c'" + d" = an integer of 2 to 100, Me is a methyl group, Et is an ethyl group, Ph is a phenyl group, and repeating units indicated in parentheses with c‴ and d" may be randomly bonded).

### [Method for Producing Fluorine-Containing Organohydrogensilane Compound]

A method for producing the fluorine-containing organohydrogensilane compound represented by general formula (1), described above, of the present invention preferably includes a step of introducing two or more diorganohydrosilyl groups into the fluorine-containing compound in a predetermined linkage structure by a hydrosilylation reaction using, for example, a fluorine-containing compound containing an alkenyl (vinyl) group and represented by the following general formula (1A) and an organohydrogensilane compound having at least three diorganohydrosilyl groups and represented by the following general formula (1B).

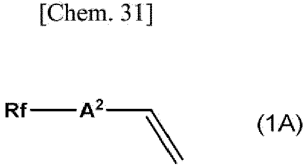

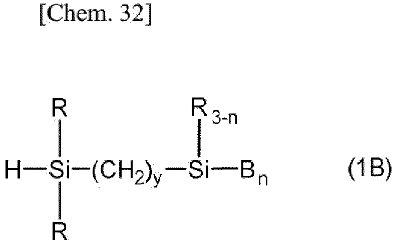

In general formula (1A), A² is a divalent organic group that has 1 to 18 carbon atoms and that may contain at least one selected from an oxygen atom, a nitrogen atom, and a silicon atom. The descriptions of Rf, R, B, y, and n in general formulae (1A) and (1B) described above are the same as those of Rf, R, B, y, and n in general formula (1) described above. That is, in general formulae (1A) and (1B) described above, Rf is a monovalent perfluoropolyether group, each R is independently a monovalent hydrocarbon group having 1 to 6 carbon atoms, n is an integer of 1 to 3, when n is 1, B is a monovalent silicon-containing organic group that has two or more diorganohydrosilyl groups and that forms a silalkylene structure with a silicon atom coupled thereto, or when n is 2 or 3, each B is independently a monovalent silicon-containing organic group that has one or more diorganohydrosilyl groups and that forms a silalkylene structure with the silicon atom coupled thereto, and y is 1 or 2.

A² is a divalent organic group that has 1 to 18 carbon atoms and that may contain at least one selected from an oxygen atom, a nitrogen atom, and a silicon atom. Examples of A² include an alkylene group having 1 to 10 carbon atoms, an alkylene group having 1 to 10 carbon atoms and containing an arylene group having 6 to 8 carbon atoms (for example, an alkylene-arylene group having 6 to 18 carbon atoms), a divalent group in which a diorganosilylene group is bonded to an alkylene group having 1 to 10 carbon atoms, a divalent group in which a diorganosilylene group is bonded to an arylene group having 6 to 8 carbon atoms, a divalent group in which an alkylene group having 1 to 10 carbon atoms is coupled to an alkylene group having 1 to 8 carbon atoms with a diorganosilylene group provided therebetween, a divalent group in which an alkylene group having 1 to 8 carbon atoms is coupled to an arylene group having 6 to 8 carbon atoms with a diorganosilylene group provided therebetween, and a divalent group in which any of these groups further has at least one selected from an oxygen atom of an ether bond, a secondary amino group (imino group), a tertiary amino group (substituted imino group), and an amide bond. Among these, A² is preferably a divalent group containing, in its molecular chain, at least one selected from an oxygen atom of an ether bond, a secondary amino group (imino group), a tertiary amino group (substituted imino group), and an amide bond.

Specifically, A² is preferably represented by any of the following general formulae (8) to (15): 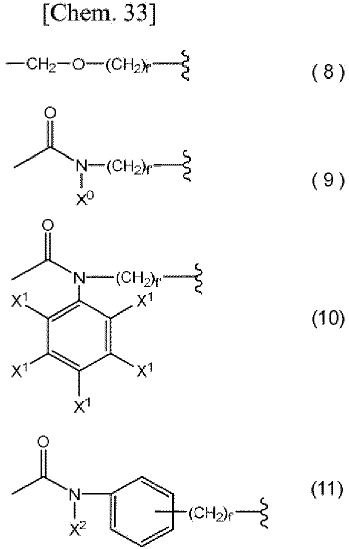 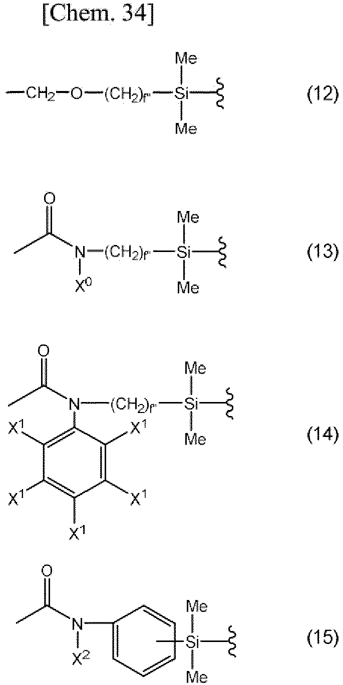 (where in each of the formulae, X⁰ is a hydrogen atom, a methyl group, or an ethyl group, each X¹ is independently a hydrogen atom, a fluorine atom, a methyl group, an ethyl group, or a trifluoromethyl group, X² is a hydrogen atom, a methyl group, an ethyl group, or a phenyl group, f is an integer of 0 to 4, f" is an integer of 1 to 6, a bond marked with a wavy line is bonded to the vinyl group in formula (1A) described above, and an unmarked bond is bonded to Rf).

Examples of the structures of A² represented by general formulae (8) to (15) described above include the following: 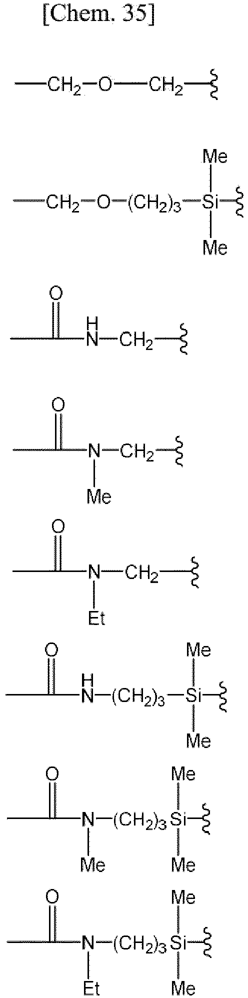 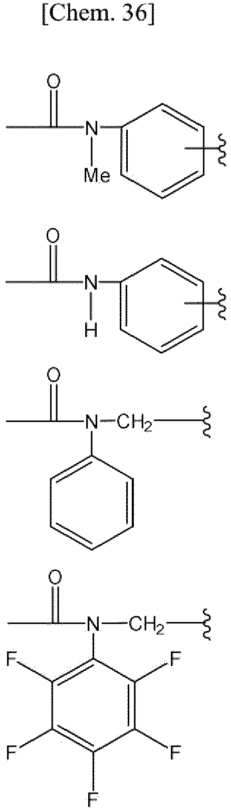 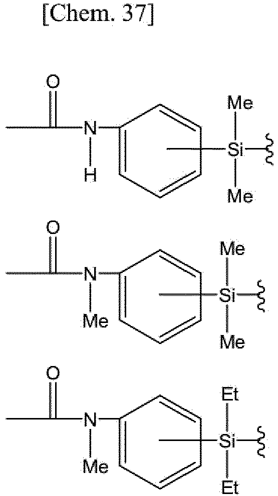 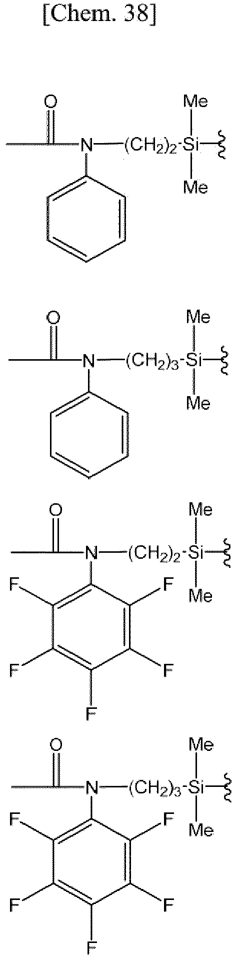 (where in each of the formulae, Me is a methyl group, Et is an ethyl group, a bond marked with a wavy line is bonded to the vinyl group in formula (1A) described above, and an unmarked bond is bonded to Rf).

The production scheme (reaction formula) of a preferred method for producing the fluorine-containing organohydrogensilane compound according to the present invention is presented below.

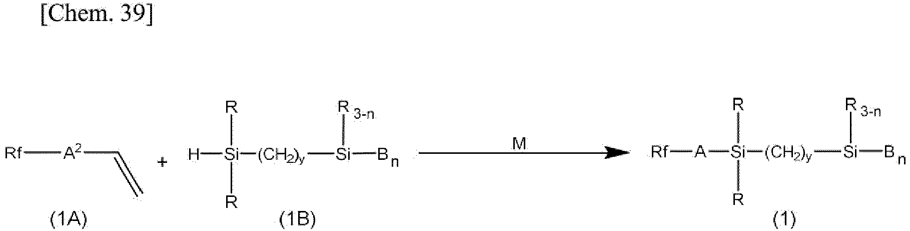

The descriptions of Rf, A, R, B, y, and n in the reaction formula described in the above scheme are the same as the descriptions of Rf, A, R, B, y, and n in general formula (1) described above. The description of A² is the same as the description of A² in general formula (1A) described above. M is a metal catalyst.

In the above scheme, a fluorine-containing compound that is represented by general formula (1A) described above and that has an alkenyl group (preferably a vinyl group or an allyl group) at an end of the molecular chain and an organohydrogensilane compound that is represented by general formula (1B) described above and that has at least three diorganohydrosilyl groups in its molecule are subjected to a hydrosilylation reaction in the presence of a metal catalyst (M) to form a fluorine-containing organohydrogensilane compound represented by general formula (1) described above.

In the above reaction, for example, the following compounds can be used as the fluorine-containing compound that is represented by general formula (1A) described above and that has an alkenyl group (preferably a vinyl group or an allyl group) at an end of the molecular chain: 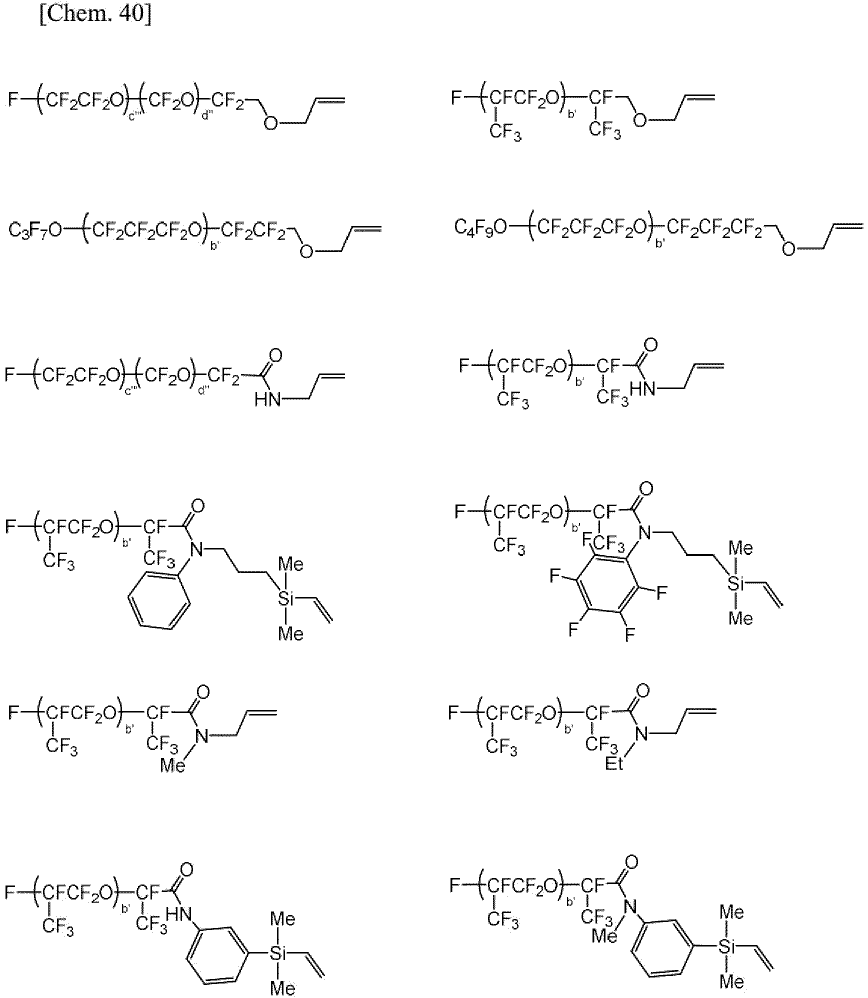 (where in each of the formulae, b' is an integer of 2 to 100, c‴ and d" are each an integer of 1 to 99, c'" + d" = an integer of 2 to 100, Me is a methyl group, Et is an ethyl group, and repeating units indicated in parentheses with c'" and d" may be randomly bonded).

For example, the following compounds can be used as the organohydrogensilane compound that is represented by general formula (1B) described above and that has at least three diorganohydrosilyl groups in its molecule: 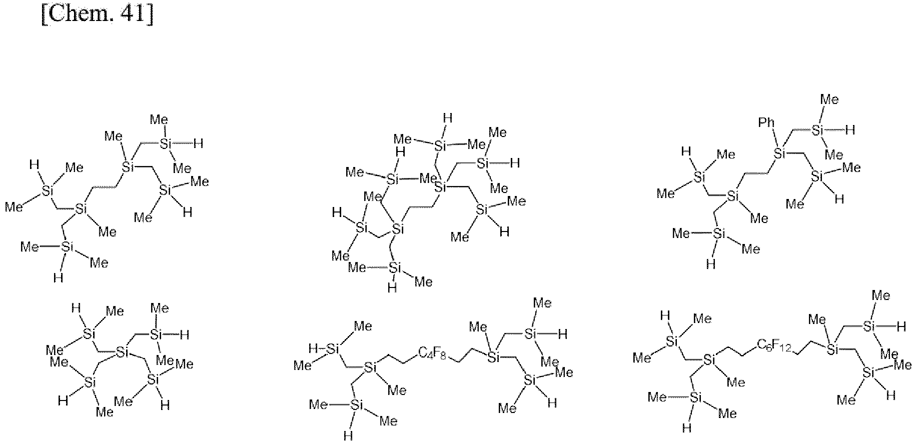 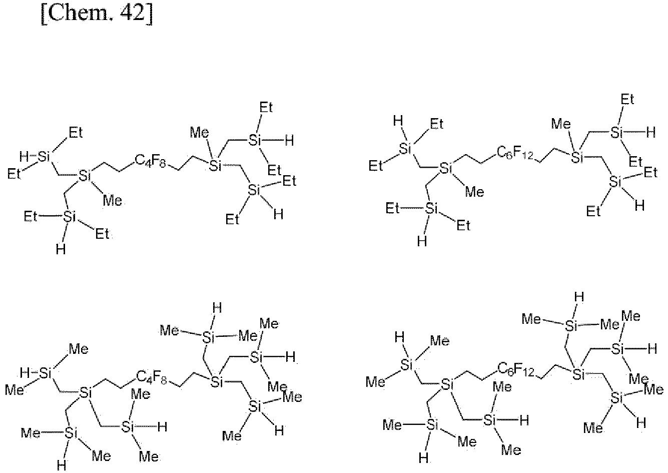 (where in the formulae, Me is a methyl group, Et is an ethyl group, and Ph is a phenyl group).

The addition of M (metal catalyst) in the foregoing reaction scheme allows hydrosilylation to proceed rapidly. M is not particularly limited as long as it is a metal catalyst capable of serving as a catalyst for hydrosilylation. A compound containing a metal atom, such as platinum, rhodium, ruthenium, or palladium, can be suitably used. Examples thereof include chloroplatinic acid, a complex of chloroplatinic acid with an olefin, such as ethylene, a complex of chloroplatinic acid with an alcohol or vinylsiloxane, metallic platinum supported on silica, alumina, carbon, or the like, RhCl(PPh₃)₃, RhCl(CO)(PPh₃)₂, Ru₃(CO)₁₂, IrCl(CO)(PPh₃)₂, and Pd(PPh₃)₄. In the above formula, Ph is a phenyl group. Among these, a platinum compound is particularly preferred.

When these catalysts are used as solid catalysts, they can be used in solid form. To allow the reaction to proceed more quickly, a solution of the foregoing metal catalyst in an appropriate solvent is preferably used. The solution, when added, is preferably added dropwise after it is determined that the system in which the fluorine-containing compound represented by general formula (1A) described above and having an alkenyl group (preferably a vinyl group or an allyl group) at the end of the molecular chain and the organohydrogensilane compound represented by general formula (1B) described above and having at least three diorganohydrosilyl groups in its molecule are both contained has been heated to a predetermined temperature. The predetermined temperature is preferably 50°C or higher, more preferably 65°C or higher.

When the fluorine-containing compound represented by general formula (1A) described above and having an alkenyl group (preferably a vinyl group or an allyl group) at the end of the molecular chain or the organohydrogensilane compound represented by general formula (1B) described above and having at least three diorganohydrosilyl groups in its molecule is solid or when these compounds are not soluble in each other, they may be dissolved in a small amount of organic solvent, and then M (metal catalyst) may be added. Examples of the solvent that can be used include benzene, toluene, xylene, and 1,3-bistrifluoromethylbenzene. Preferably, 1,3-bistrifluoromethylbenzene is used.

The fluorine-containing compound represented by general formula (1A) described above and having an alkenyl group (preferably a vinyl group or an allyl group) at the end of the molecular chain is used in such an amount that the amount of alkenyl groups in the fluorine-containing compound is 0.16 to 0.30 equivalents, preferably 0.20 to 0.25 equivalents, based on the amount of hydrosilyl groups in the compound represented by general formula (1B) described above. If the amount of alkenyl groups in the fluorine-containing compound is less than 0.16 equivalents based on the amount of hydrosilyl groups in the compound represented by general formula (1B) described above, clouding or an increase in viscosity occurs when the resulting fluorine-containing organohydrogensilane compound is added to a thermosetting fluoropolyether-based curable composition, or the surface of a cured product obtained by heat curing may be dotted with uncured portions, which is not preferred. If the amount of alkenyl group in the fluorine-containing compound is more than 0.30 equivalents based on the amount of hydrosilyl group in the compound represented by general formula (1A) described above, the amount of hydrosilyl group in the resulting fluorine-containing organohydrogensilane compound is too small. Thus, the thermosetting fluoropolyether-based curable composition is less likely to be cured, which is not preferred.

The fluorine-containing organohydrogensilane compound of the present invention obtained as described above does not contain a siloxane bond, exhibits high compatibility with a base oil in a fluoropolyether-based curable composition, and can inhibit clouding and an increase in viscosity of the fluoropolyether-based curable composition. By curing the fluoropolyether-based curable composition using the fluorine-containing organohydrogensilane compound of the present invention as a crosslinking agent, a fluoropolyether-based cured product that has been uniformly cured without being dotted with uncured portions can be obtained.

### EXAMPLES

While the present invention will be specifically described below with reference to Examples and Comparative Examples, the present invention is not limited to the following Examples. In the following Examples, Me represents a methyl group, and parts represent parts by mass. The amount of vinyl groups and the amount of hydrosilyl groups were each measured by ¹H-NMR. The number-average molecular weight of an alkenyl group-containing perfluoropolyether compound (base oil) was calculated from ¹⁹F-NMR. The viscosity is a value measured with a rotational viscometer at 23°C.

### • Synthesis of fluorine-containing organohydrogensilane compound

### [Example 1]

Into a 1-L flask, 150 g of an organohydrogensilane compound represented by the following formula (16): 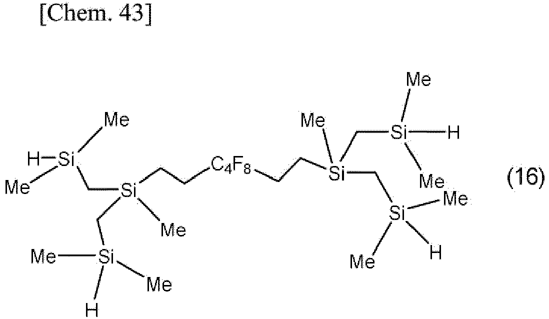
(the amount of hydrosilyl groups: 0.616 mol/100 g),
339 g of a compound represented by the following formula (17): 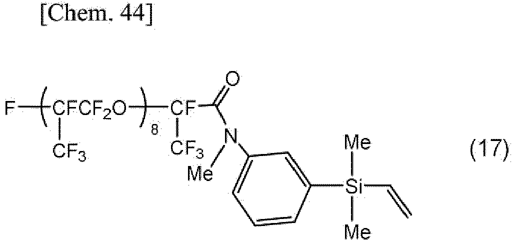
(the amount of vinyl groups: 0.0681 mol/100 g), and
91 g of 1,3-bistrifluoromethylbenzene were fed. The flask was purged with nitrogen.

After the temperature was increased to 70°C, 0.16 g of a solution of a (C1) platinum-divinyltetramethyldisiloxane complex in toluene (platinum concentration: 0.5% by mass) was added dropwise. The resulting mixture was stirred at 85°C for 1 hour. The reaction solution was quenched and concentrated under reduced pressure. The resulting residue was dissolved in FC-3283 (524 g). The resulting solution was stirred with 9.10 g of activated carbon (trade name: Shirasagi AS, available from Osaka Gas Chemicals Co., Ltd.) for 1 hour and then filtered. Activated carbon (9.10 g) was added to the resulting solution. The mixture was stirred for 1 hour and then filtered.

The main component was extracted from the resulting solution by preparative liquid chromatography and was concentrated under reduced pressure to give 376 g of a compound represented by the following formula (18): 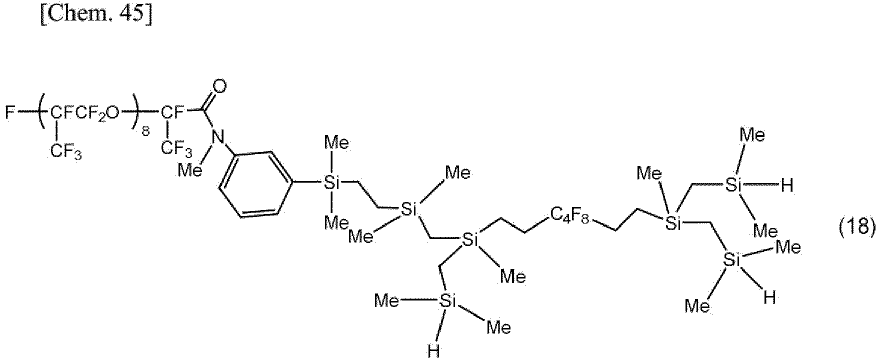 (the amount of hydrosilyl group: 0.143 mol/100 g).
The ¹H-NMR spectrum of the resulting compound is illustrated in FIG. 1. As illustrated in FIG. 1, regarding the resulting product, the following signals were observed: δ 7.86 to 6.55 (m, 4H), 4.38 to 3.64 (m, 3H), 3.15 (s, 3H), 2.46 to 1.48 (br, 4H), and 1.18 to -0.91 (m, 52H). Thus, the formation of the compound represented by formula (18) described above was verified.

### [Example 2]

All operations were performed in the same manner as in Example 1, except that 1,012 g of a compound represented by the following formula (19): 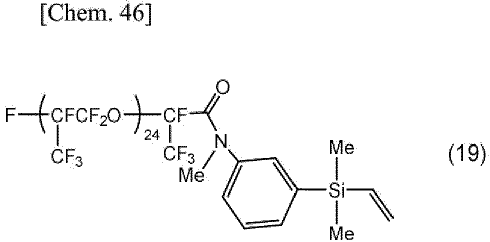 (the amount of vinyl group: 0.0228 mol/100 g) was used instead of the compound represented by formula (17) described above.
Thus, 741 g of a compound represented by the following formula (20): 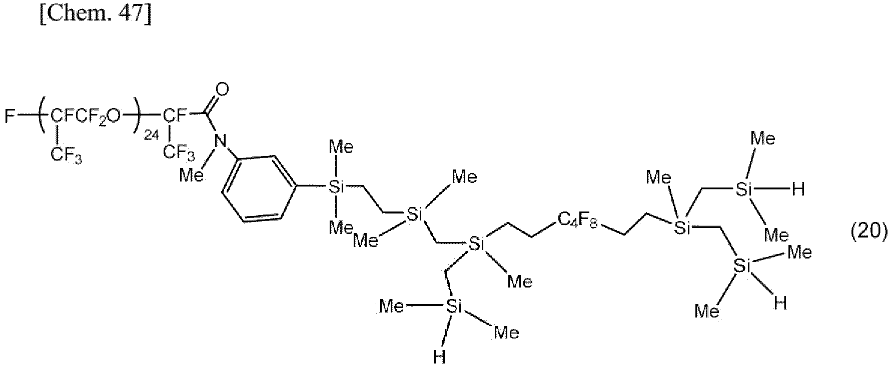 (the amount of hydrosilyl group: 0.0682 mol/100 g) was formed.
The ¹H-NMR spectrum of the resulting product indicated the following signals: δ 7.68 to 6.36 (m, 4H), 4.21 to 3.44 (s, 3H), 3.03 (s, 3H), 2.29 to 1.41 (br, 4H), and 1.13 to -0.98 (m, 52H). Thus, the formation of the compound represented by formula (20) described above was verified.

### [Example 3]

All operations were performed in the same manner as in Example 1, except that 85 g of a compound represented by the following formula (21): 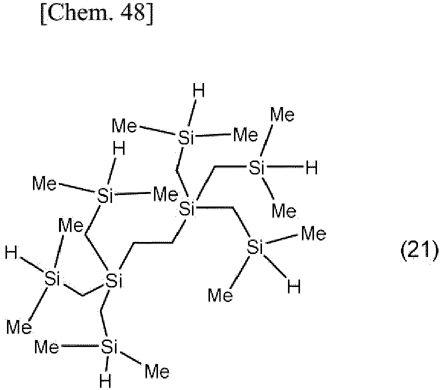 (the amount of hydrosilyl group: 1.09 mol/100 g) was used instead of the compound represented by formula (16) described above.
Thus, 323 g of a compound represented by the following formula (22): 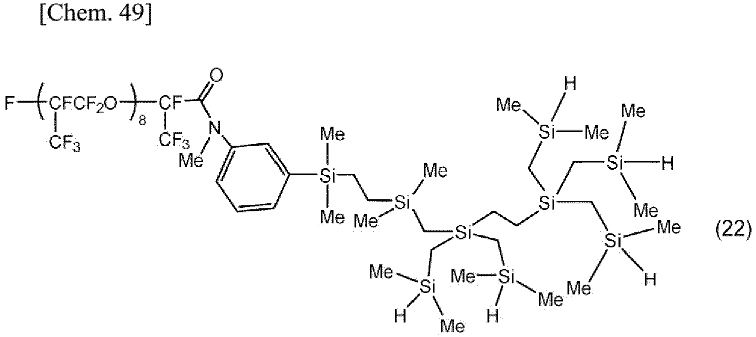 (the amount of hydrosilyl group: 0.247 mol/100 g) was formed.
The ¹H-NMR spectrum of the resulting product indicated the following signals: δ 7.85 to 6.55 (m, 4H), 4.29 to 3.51 (m, 5H), 3.15 (s, 3H), and 1.23 to -0.91 (m, 62H). Thus, the formation of the compound represented by formula (22) described above was verified.

### [Example 4]

All operations were performed in the same manner as in Example 1, except that 325 g of a compound represented by the following formula (23): 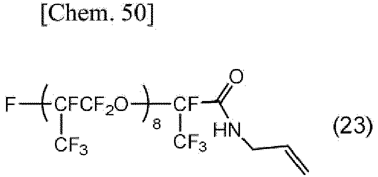 (the amount of vinyl group: 0.0710 mol/100 g) was used instead of the compound represented by formula (17) described above.
Thus, 294 g of a compound represented by the following formula (24): 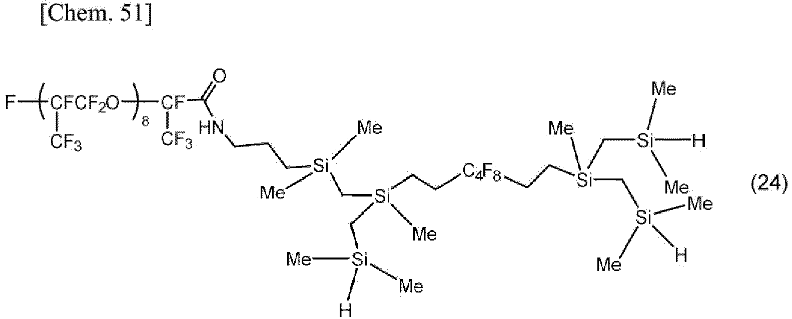 (the amount of hydrosilyl group: 0.147 mol/100 g) was formed.
The ¹H-NMR spectrum of the resulting product indicated the following signals: δ 6.92 to 6.62 (s, 1H), 4.40 to 3.67 (m, 3H), 3.42 to 3.06 (m, 2H), 2.47 to 1.47 (br, 4H), 1.75 to 1.39 (m, 2H), and 1.18 to -0.90 (m, 54H). Thus, the formation of the compound represented by formula (24) described above was verified.

### [Example 5]

All operations were performed in the same manner as in Example 1, except that 264 g of a compound represented by the following formula (25): 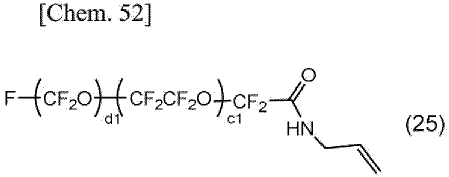
(where the average value of d1 + c1 = 12, and dl:cl = 0.98:1)
(the amount of vinyl group: 0.0873 mol/100 g) was used instead of the compound represented by formula (17) described above. Thus, 317 g of a compound represented by the following formula (26): 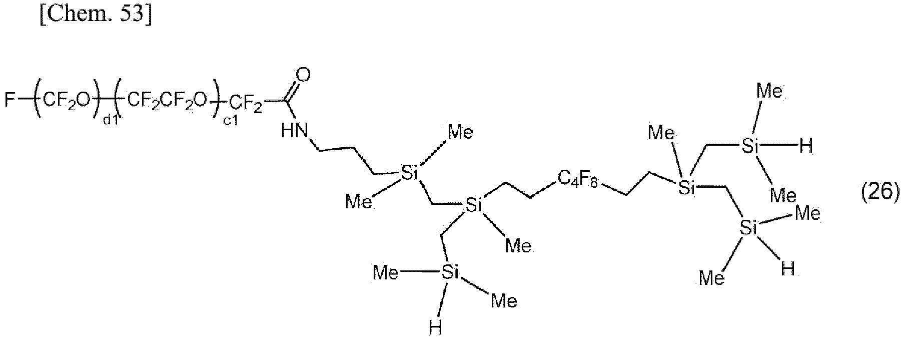
(where the average value of d1 + c1 = 12, and d1:c1 = 0.98: 1)
(the amount of hydrosilyl group: 0.169 mol/100 g) was formed. The ¹H-NMR spectrum of the resulting product indicated the following signals: δ 6.89 to 6.61 (s, 1H), 4.39 to 3.66 (m, 3H), 3.41 to 3.07 (m, 2H), 2.46 to 1.47 (br, 4H), 1.74 to 1.39 (m, 2H), and 1.18 to -0.90 (m, 54H). Thus, the formation of the compound represented by formula (26) described above was verified.

### <Preparation of Thermosetting Fluoropolyether-Based Composition and Verification of Compatibility of Fluorine-Containing Organohydrogensilane Compound with Base Oil>

### [Example 6]

To 100 parts of a base oil represented by the following formula (27) (the number-average molecular weight: 15,550, the rate of reduction in mass: 0.5%, viscosity: 10,900 mPa·s, the amount of vinyl group: 0.012 mol/100 g), 0.1 parts of a solution of a platinum-divinyltetramethyldisiloxane complex in toluene (platinum concentration: 0.5% by mass), 0.07 parts of a compound represented by the following formula (28), and 9.74 parts of a compound represented by formula (18) described above were added. After mixing, defoaming was performed under reduced pressure to prepare a thermosetting fluoropolyether-based composition. The resulting thermosetting fluoropolyether-based composition was provided as a colorless transparent oil. Thus, the fluorine-containing organohydrogensilane compound represented by formula (18) described above was found to have high compatibility with the base oil. 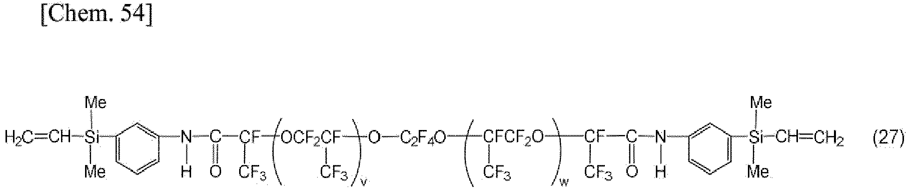 (where v and w are each an integer of 1 or more, and the average value of v + w = 90)

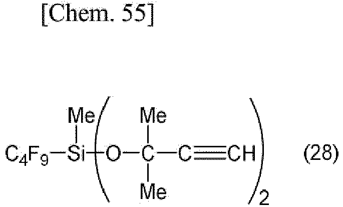

### [Example 7]

A thermosetting fluoropolyether-based composition was prepared by performing all operations in the same manner as in Example 6, except that 20.42 parts of the compound represented by formula (20) described above was used instead of the compound represented by formula (18) described above. The resulting thermosetting fluoropolyether-based composition was obtained as a colorless transparent oil. Thus, the fluorine-containing organohydrogensilane compound represented by formula (20) described above was found to have high compatibility with the base oil.

### [Example 8]

A thermosetting fluoropolyether-based composition was prepared by performing all operations in the same manner as in Example 6, except that 5.73 parts of the compound represented by formula (22) described above was used instead of the compound represented by formula (18) described above. The resulting thermosetting fluoropolyether-based composition was obtained as a colorless transparent oil. Thus, the fluorine-containing organohydrogensilane compound represented by formula (22) described above was found to have high compatibility with the base oil.

### [Example 9]

A thermosetting fluoropolyether-based composition was prepared by performing all operations in the same manner as in Example 6, except that 9.47 parts of the compound represented by formula (24) described above was used instead of the compound represented by formula (18) described above. The resulting thermosetting fluoropolyether-based composition was obtained as a colorless transparent oil. Thus, the fluorine-containing organohydrogensilane compound represented by formula (24) described above was found to have high compatibility with the base oil.

### [Example 10]

A thermosetting fluoropolyether-based composition was prepared by performing all operations in the same manner as in Example 6, except that 8.24 parts of the compound represented by formula (26) described above was used instead of the compound represented by formula (18) described above. The resulting thermosetting fluoropolyether-based composition was obtained as a colorless transparent oil. Thus, the fluorine-containing organohydrogensilane compound represented by formula (26) described above was found to have high compatibility with the base oil.

### [Comparative Example 1]

A thermosetting fluoropolyether-based composition was prepared by performing all operations in the same manner as in Example 6, except that 2.26 parts of the compound represented by formula (16) described above was used instead of the compound represented by formula (18) described above. The resulting thermosetting fluoropolyether-based composition was obtained as a cloudy oil. Thus, the fluorine-containing organohydrogensilane compound represented by formula (16) described above was found to have poor compatibility with the base oil.

### [Comparative Example 2]

A thermosetting fluoropolyether-based composition was prepared by performing all operations in the same manner as in Example 6, except that 2.61 parts of a compound (the amount of hydrosilyl group: 0.532 mol/100 g) represented by the following formula (29) was used instead of the compound represented by formula (18) described above. The resulting thermosetting fluoropolyether-based composition was obtained as a cloudy oil. Thus, the fluorine-containing organohydrogensilane compound represented by the following formula (29) was found to have poor compatibility with the base oil.

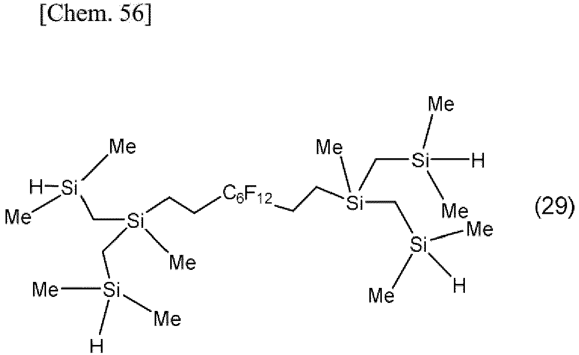

### [Comparative Example 3]

A thermosetting fluoropolyether-based composition was prepared by performing all operations in the same manner as in Example 6, except that 3.52 parts of a compound (a compound described in Example 1 of JP-A 2002-012769 (Patent Document 5), the amount of hydrosilyl group: 0.408 mol/100 g) represented by the following formula (30) was used instead of the compound represented by formula (18) described above. The resulting thermosetting fluoropolyether-based composition was obtained as a slightly cloudy translucent oil. Thus, the fluorine-containing organohydrogensilane compound represented by the following formula (30) was found to have poor compatibility with the base oil.

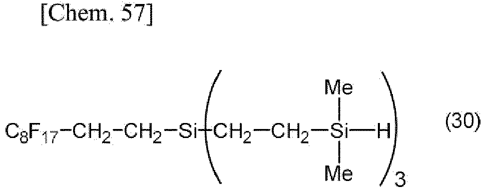

### <Presence or Absence of Oily Component on Surface of Fluoropolyether Cured Product>

Each of the thermosetting fluoropolyether-based compositions prepared in Examples 6 to 10 and Comparative Examples 1 to 3 was poured into a 2-mm-thick mold composed of stainless steel placed on a sheet composed of Teflon (registered trademark, the same applies hereinafter). Another sheet composed of Teflon was placed to sandwich the composition therebetween, and then press-curing was performed at 150°C for 10 minutes. After the press-curing, the 2-mm-thick mold composed of stainless steel was removed. A residual oily component on the surface of the resulting fluoropolyether cured product was evaluated according to the following evaluation criteria. Table 1 presents the results.

### [Evaluation Criteria]

○: When the surface of the cured product peeled from the Teflon sheets was visually observed and examined by finger touch, no residual oily component was present.
×: When the surface of the cured product peeled from the Teflon sheets was visually observed and examined by finger touch, a residual oily component was present.

**[Table 1]**

| | Presence or absence of oily component on surface of cured product |
|---|---|
| Example 6 | ○ |
| Example 7 | ○ |
| Example 8 | ○ |
| Example 9 | ○ |
| Example 10 | ○ |
| Comparative Example 1 | × |
| Comparative Example 2 | × |
| Comparative Example 3 | × |

In each of Examples 6 to 10, the surface of the fluoropolyether-based cured product obtained from the thermosetting fluoropolyether-based composition was not dotted with an uncured oily component. In each of Comparative Examples 1 to 3, the surface of the fluoropolyether-based cured product obtained from the thermosetting fluoropolyether-based composition was dotted with an uncured oily component. This is presumably because each of the fluorine-containing organohydrogensilane compounds represented by formulae (16), (29), and (30) described above was partially unreacted with the base oil during the thermal curing due to its poor compatibility with the base oil, and thus remained as the oily component on the surface of the fluoropolyether-based cured product.

## Claims

1. A fluorine-containing organohydrogensilane compound represented by the following general formula (1), the fluorine-containing organohydrogensilane compound having two or more hydrosilyl groups and being a compound in which linkages of silicon atoms coupled to each other are each composed of a silalkylene structure, 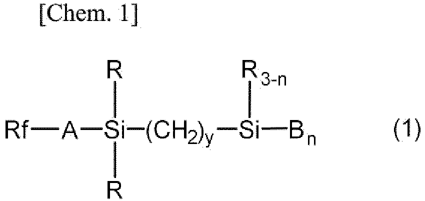 wherein Rf is a monovalent perfluoropolyether group, A is a divalent organic group that has 1 to 20 carbon atoms and that may contain at least one selected from an oxygen atom, a nitrogen atom, and a silicon atom, each R is independently a monovalent hydrocarbon group having 1 to 6 carbon atoms, n is an integer of 1 to 3, when n is 1, B is a monovalent silicon-containing organic group that has two or more diorganohydrosilyl groups and that forms a silalkylene structure with a silicon atom coupled thereto, or when n is 2 or 3, each B is independently a monovalent silicon-containing organic group that has one or more diorganohydrosilyl groups and that forms a silalkylene structure with the silicon atom coupled thereto, and y is 1 or 2.

2. The fluorine-containing organohydrogensilane compound according to claim 1, wherein Rf in general formula (1) is a group represented by the following general formula (2): 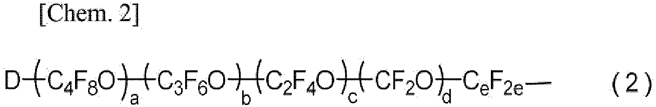 wherein D is a fluorine atom or a perfluorooxyalkyl group having 1 to 6 carbon atoms, a, b, c, and d are each independently an integer of 0 to 100, 2 ≤ a + b + c + d ≤ 100, e is an integer of 1 to 3, repeating units indicated in parentheses may be randomly bonded, and each of these units may be linear or branched.

3. The fluorine-containing organohydrogensilane compound according to claim 1 or 2, wherein A in general formula (1) is selected from an alkylene group having 1 to 12 carbon atoms, an alkylene group containing an arylene group having 6 to 8 carbon atoms, a divalent group in which alkylene groups are bonded to each other with a diorganosilylene group provided therebetween, a divalent group in which an alkylene group is bonded to an arylene group with a diorganosilylene group provided therebetween, and a divalent group in which any of these groups further has at least one selected from an oxygen atom of an ether bond, a secondary amino group, a tertiary amino group, and an amide bond.

4. The fluorine-containing organohydrogensilane compound according to any one of claims 1 to 3, wherein A in general formula (1) is any of groups represented by the following general formulae (3) to (6): 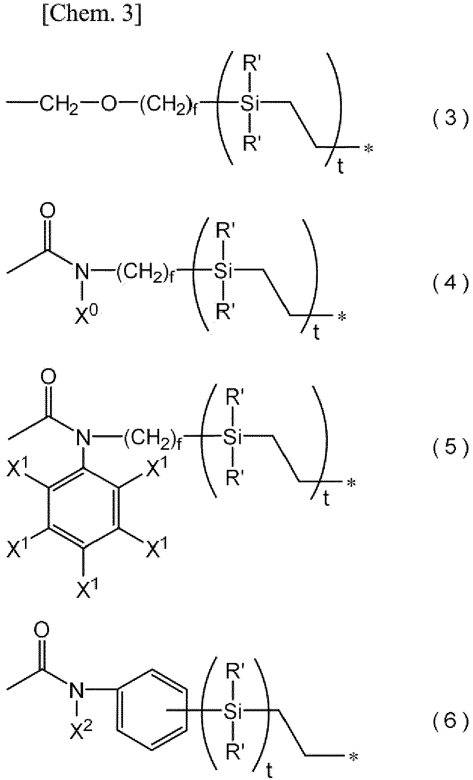 wherein X⁰ is a hydrogen atom, a methyl group, or an ethyl group, each X¹ is independently a hydrogen atom, a fluorine atom, a methyl group, an ethyl group, or a trifluoromethyl group, X² is a hydrogen atom, a methyl group, an ethyl group, or a phenyl group, each R' is independently a methyl group or an ethyl group, f is an integer of 1 to 6, t is 0 or 1, bonds marked with * are each attached to a Si atom in general formula (1), and unmarked bonds are each attached to Rf.

5. The fluorine-containing organohydrogensilane compound according to any one of claims 1 to 4, wherein each R in general formula (1) is any of a methyl group, an ethyl group, an isopropyl group, a tert-butyl group, and a phenyl group.

6. The fluorine-containing organohydrogensilane compound according to any one of claims 1 to 5, wherein the number of consecutive silalkylene structures in a molecular chain between Rf and the diorganohydrosilyl group in B in general formula (1) is two or more.

7. The fluorine-containing organohydrogensilane compound according to any one of claims 1 to 6, wherein B in general formula (1) is a group represented by the following general formula (7): 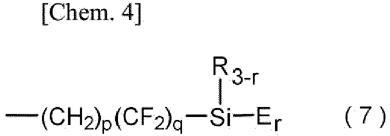 wherein p is an integer of 1 to 6, q is an integer of 0 to 6, r is an integer of 1 to 3, R is as defined above, E is a hydrogen atom or a group represented by the following formula: 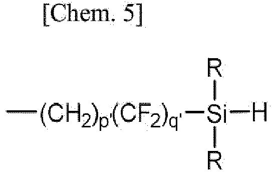
wherein R is as defined above, p' is an integer of 1 to 6, and q' is an integer of 0 to 6,
provided that when E is a hydrogen atom, r is 1, and
repeating units indicated in parentheses with p and q or with p' and q' may be randomly bonded.

8. The fluorine-containing organohydrogensilane compound according to any one of claims 1 to 7, wherein the fluorine-containing organohydrogensilane compound represented by formula (1) is a compound represented by any of the following formulae: 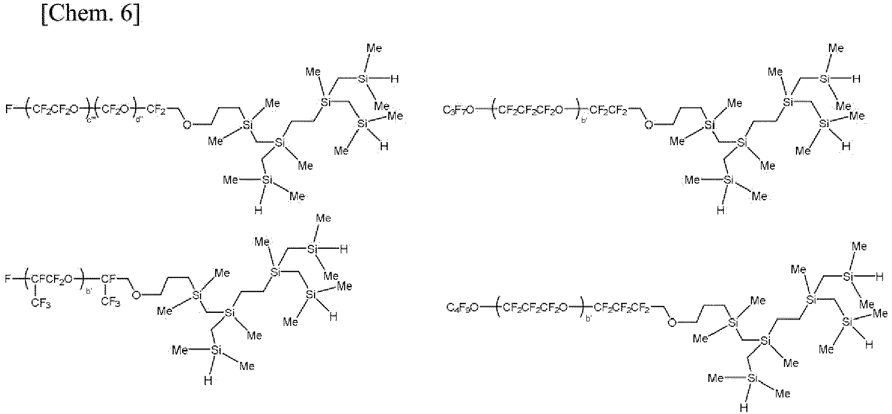 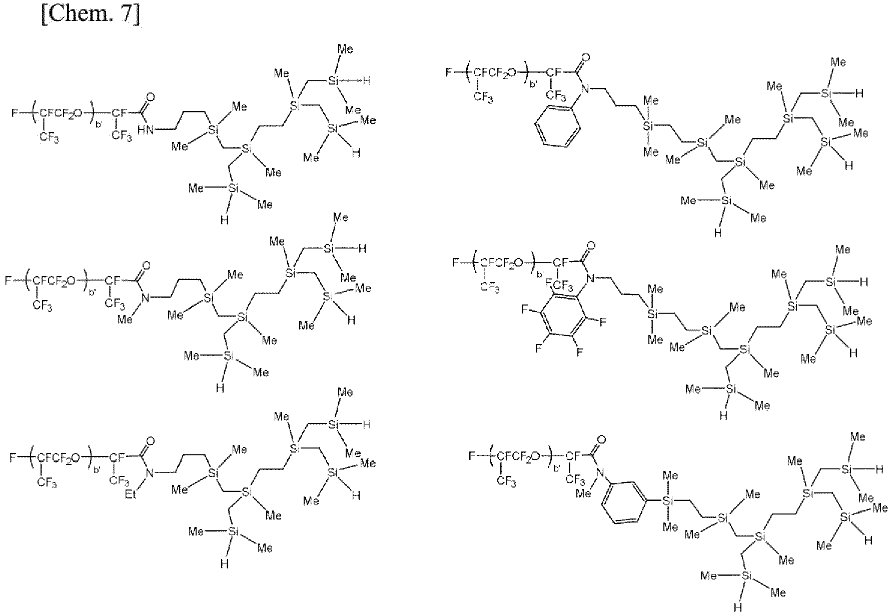 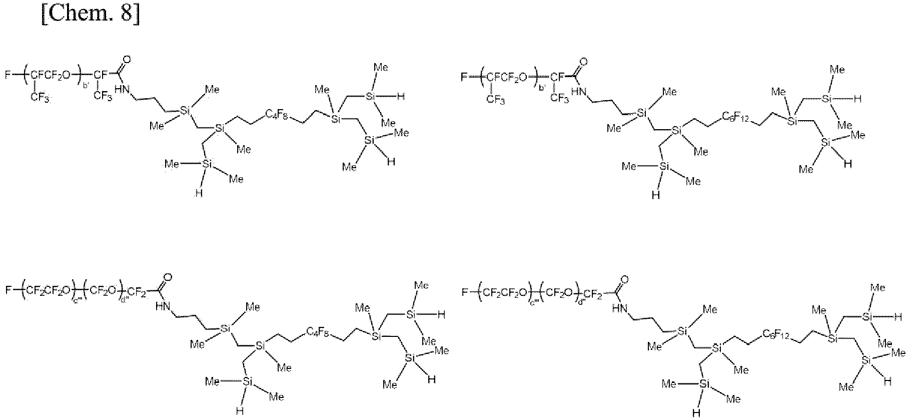 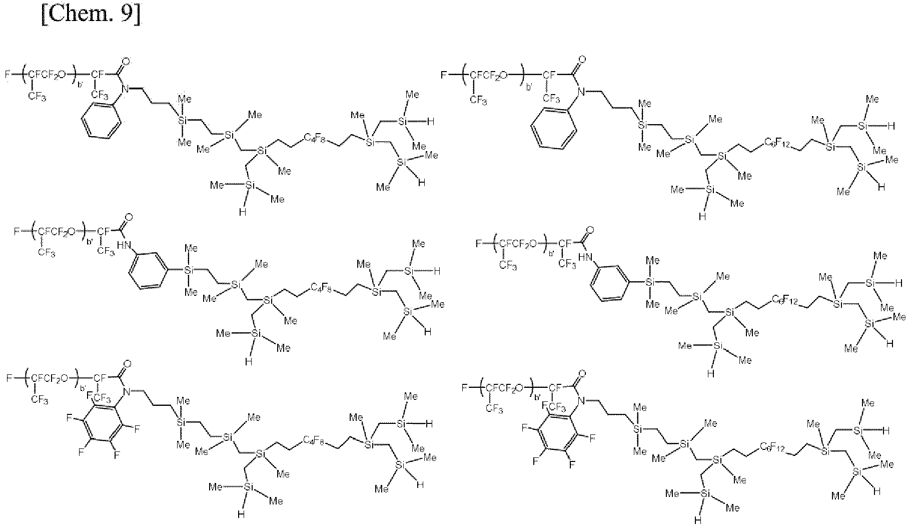 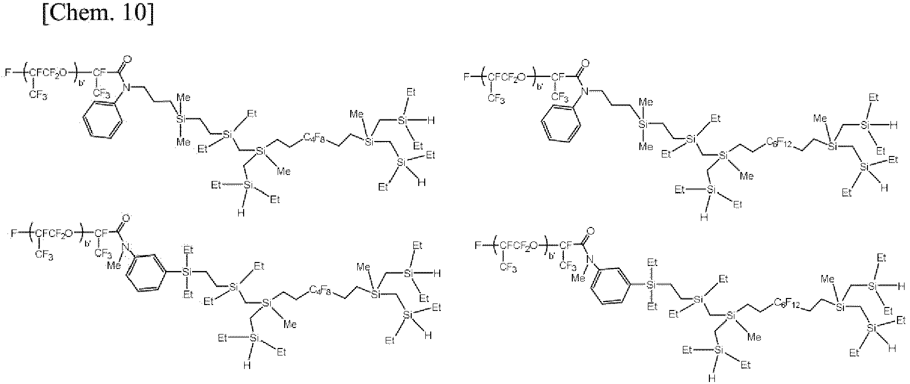 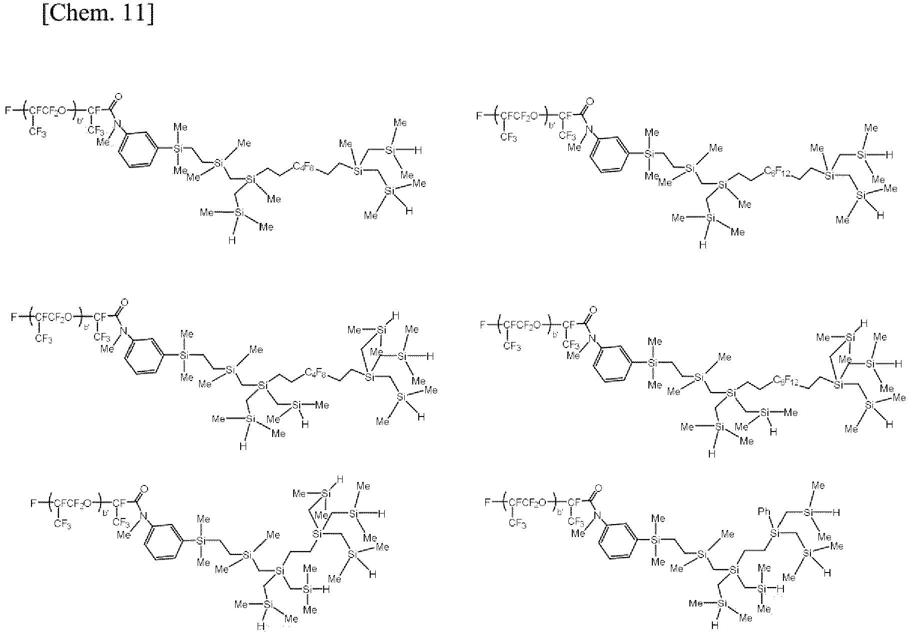 wherein b' is an integer of 2 to 100, c‴ and d" are each an integer of 1 to 99, c'" + d" = an integer of 2 to 100, Me is a methyl group, Et is an ethyl group, Ph is a phenyl group, and repeating units indicated in parentheses with c'" and d" may be randomly bonded.
